(19) Europäisches Patentamt
European Patent Office
Office européen des brevets

(11) **EP 2 081 072 A1**

(12) **EUROPEAN PATENT APPLICATION**

(43) Date of publication:
**22.07.2009 Bulletin 2009/30**

(51) Int Cl.:
**G02B 21/36** (2006.01)

(21) Application number: **09000586.9**

(22) Date of filing: **16.01.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventors:<br>• **Kishida, Hironori**<br>  **Tokyo 151-0072 (JP)**<br>• **Kojima, Jitsunari**<br>  **Tokyo 151-0072 (JP)** |
| (30) Priority: **18.01.2008 JP 2008008976** | (74) Representative: **von Hellfeld, Axel**<br>**Wuesthoff & Wuesthoff**<br>**Patent- und Rechtsanwälte**<br>**Schweigerstrasse 2**<br>**81541 München (DE)** |
| (71) Applicant: **Olympus Corp.**<br>**Shibuya-ku**<br>**Tokyo 151-0072 (JP)** | |

(54) **Imaging device for microscope**

(57)    An image pickup unit obtains a specimen image by picking up the observation image of a specimen produced by a microscope. An installation state information obtainment unit obtains installation state information indicating the installation state of an optical member inserted into the observation light path of the microscope. An exposure condition setup unit sets an exposure condition to be used when the image pickup unit picks up the observation image to obtain a specimen image in a second magnification ratio, on the basis of installation state information used when the image pickup unit obtained a specimen image in a first magnification ratio by picking up the observation image, and on the basis of installation state information to be used when the image pickup unit obtains a specimen image in the second magnification ratio, which is a different magnification ratio from the first magnification ratio, by picking up the specimen image.

EP 2 081 072 A1

## Description

## Background of the Invention

### Field of the Invention

The present invention relates to a microscope technique and in particular to a technique used for obtaining a specimen image by picking up the observation image of a specimen produced by a microscope.

### Description of the Related Art

There is a conventional technique of equipping a microscope with an imaging apparatus, imaging as a static or dynamic image the observation image of a specimen obtained by a microscope, and observing the obtained specimen image. When a specimen is observed using such a microscope, the observable scope (i.e., the field of vision) is mainly determined by the magnification ratio of an object lens. Using an object lens with a low magnification ratio makes it possible to observe an observation in a wide scope, with a lowered resolution; on the other hand, using an object lens with a high magnification ratio narrows the scope of the observation while making it possible to obtain a specimen image with a high resolution. Exploiting these advantages, a user carries out observations by changing the magnification ratios of the object lens appropriately in accordance with the specimen.

With regard to such a technique used for a microscope-use imaging apparatus, for example, Laid-Open Japanese Patent Application Publication No. 2001-292369 has disclosed a technique for providing a comprisal capable of driving with a drive unit such as a motor a revolver used for mounting an object lens and controlling the comprisal that uses a dedicated-use controller or personal computer (simply named "PC" hereinafter), thereby alleviating the work load on the user.

Meanwhile, many imaging apparatuses are equipped with an automatic exposure (AE) correction function that is used for automatically adjusting a correct exposure (i.e., brightness) condition in order to image a specimen. The aforementioned Laid-Open Japanese Patent Application Publication No. 2001-292369 also discloses a technique of retaining a picked-up image screen by stopping the automatic exposure correction function of an imaging apparatus when changing over object lenses, thereby preventing the occurrence of a pitch-black state in an observing field of vision when changing the object lenses and preventing an exposure time from being saturated due to the occurrence of the pitch-black state, and therefore further improving the operability for the user.

In the meantime, fluorescent observations are performed in microscope observations in order to detect the structure of an organic cell and the localization and movement of a molecule. This is an observation method in which a fluorescent light emitted from a specimen when an excited light having a specific wavelength is irradiated on the specimen is measured. In the fluorescent observation, a continued irradiation on the specimen with an excited light gradually lowers the intensity of the fluorescent light due to damage on the specimen. Therefore, quick observation and photographing are required for limiting such damage to the specimen to a minimum.

With regard to a technique used for a microscope-use imaging apparatus suitable to a fluorescent observation, for example, Laid-Open Japanese Patent Application Publication No. 2006-317406 has disclosed a technique of calculating an exposure time for the next photographing operation using an image photographed and stored in advance for each observation region, thereby shortening the time needed to obtain a correct exposure.

## Summary of the Invention

A microscope-use imaging apparatus according to one aspect of the present invention includes an image pickup unit for picking up an observation image of a specimen produced by a microscope to obtain a specimen image; an installation state information obtainment unit for obtaining installation state information indicating the installation state of an optical member inserted into the observation light path of the microscope; and an exposure condition setup unit for setting an exposure condition to be used when the image pickup unit picks up the observation image in order to obtain a specimen image in a second magnification ratio on the basis of installation state information used when the image pickup unit obtained a specimen image in a first magnification ratio by picking up the observation image, and on the basis of installation state information to be used when the image pickup unit obtains a specimen image in the second magnification ratio, which is a different magnification ratio from the first magnification ratio, by picking up the specimen image.

## Brief Description of the Drawings

The present invention will be more apparent from the following detailed description when the accompanying drawings are referenced.

Fig. 1 is a diagram showing the configuration of a microscope image pickup system including a microscope-use imaging apparatus embodying the present invention;

Fig. 2 is a diagram showing an outline configuration of a microscope;

Fig. 3 is a diagram showing an outline configuration of the optical system of a microscope;

Fig. 4 is a diagram showing the configuration of an image pickup unit;

Fig. 5 is a diagram showing the configuration of an image processing unit;

Fig. 6 is a diagram of the process content of a first example of a control process by way of a flow chart;

Fig. 7 is a diagram of the process content of a subroutine process performed in the control process shown in Fig. 6 by way of a flow chart;

Fig. 8 is a diagram showing the relationship of the field of vision of a specimen image before and after changing over object lenses;

Fig. 9 is a diagram of the process content of a second example of a control process by way of a flow chart;

Fig. 10 is diagram showing the first display example of a specimen image on a display unit;

Fig. 11 is a diagram of the process content of a third example of a control process by way of a flow chart;

Fig. 12 is a diagram showing the second display example of a specimen image on a display unit;

Fig. 13 is a diagram of the process content of a fourth example of a control process by way of a flow chart;

Fig. 14 is a diagram of the process content of a subroutine process performed in the control process shown in Fig. 13 by way of a flow chart;

Fig. 15 is a diagram showing the relationship of an observation field of vision and an exposure spot region between specimen images with a different magnification ratio; and

Fig. 16 is a diagram showing an exemplary histogram showing the number of pixels for each brightness value, the pixels constituting a specimen image.

## Description of the Preferred Embodiments

The following is a description of the preferred embodiment of the present invention with reference to the accompanying drawings.

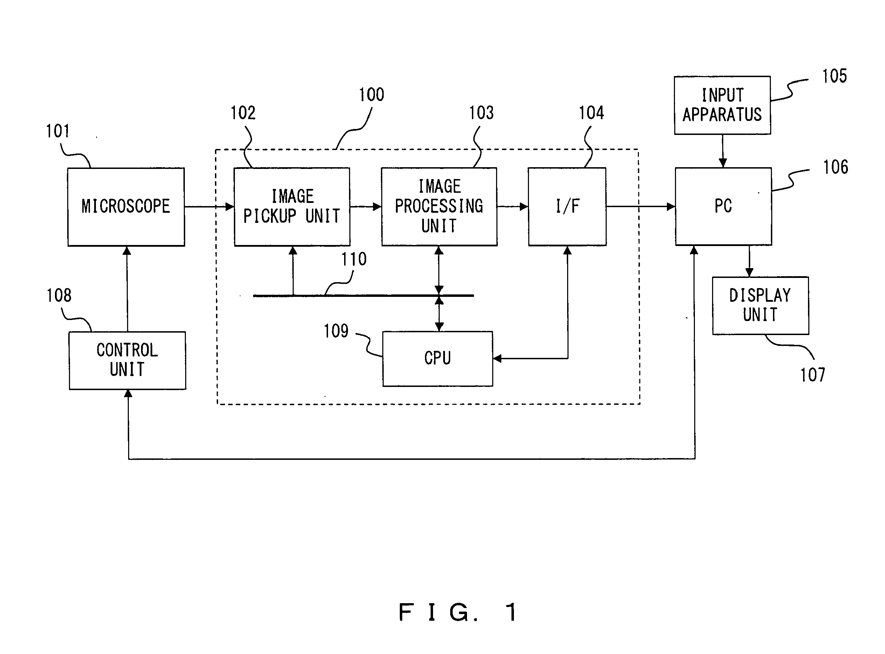

First, the respective descriptions of Figs. 1 through 5 are provided.

Fig. 1 is a diagram showing the configuration of a microscope image pickup system including a microscope-use imaging apparatus embodying the present invention. Referring to Fig. 1, the microscope-use imaging apparatus comprises an imaging apparatus 100, an input apparatus 105, a PC 106, a display unit 107, and a control unit 108.

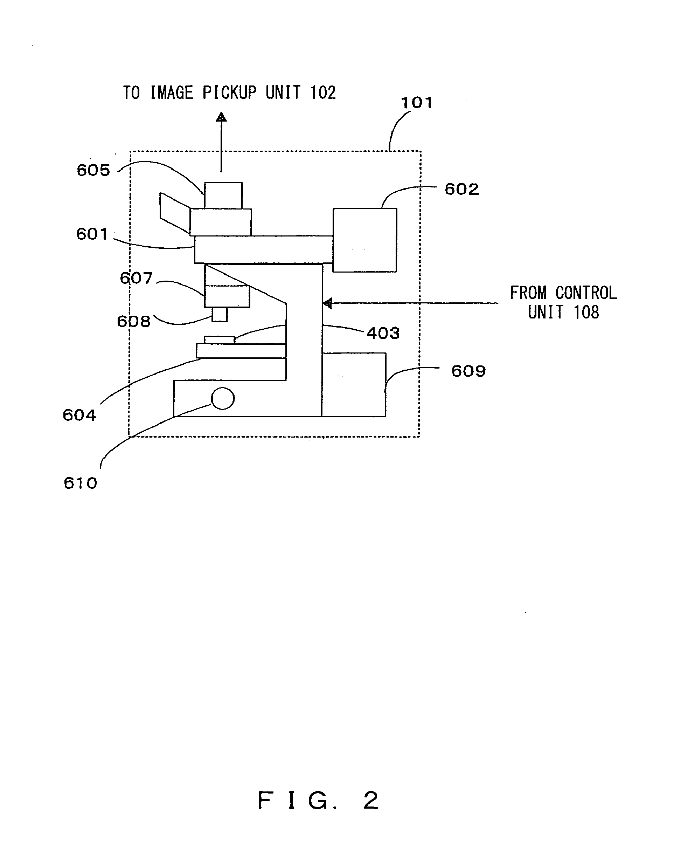

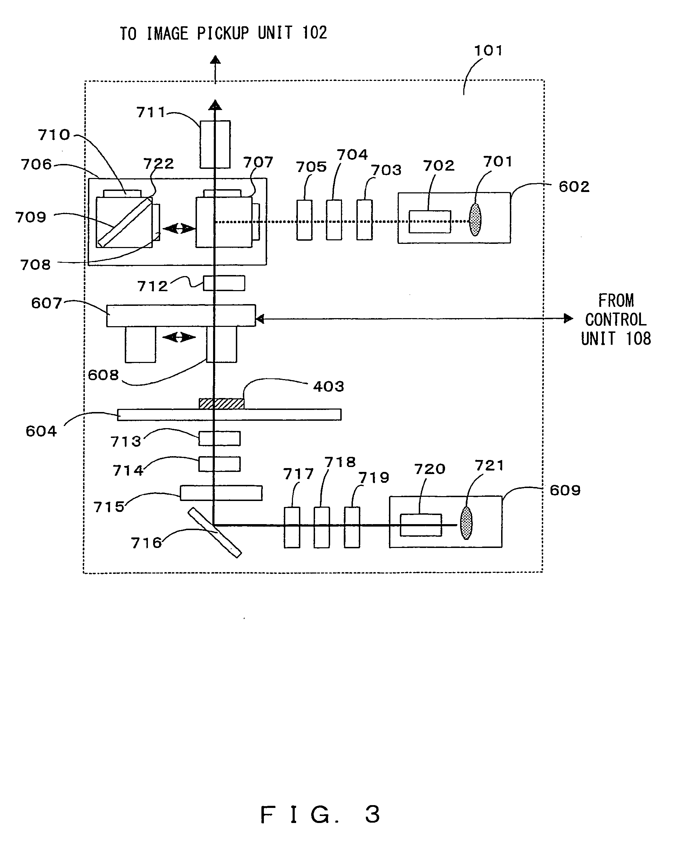

A microscope 101 is enabled to observe a specimen placed on a stage by means of various microscopy methods such as a transmissive bright field observation, a fluorescent observation, and the like. Fig. 2 shows an outline configuration of the microscope 101; and Fig. 3 shows an outline configuration of the optical system of the microscope 101 enabled for an epifluorescent observation.

The microscope 101 is connected to the image pickup unit 102 by way of an adaptor 605 and the like, and each of the components is further connected to the control unit 108.

The microscope 101 comprises light source units 602 and 609, neutral density (ND) filters 703 and 719, field stops 704 and 718, aperture stops 705 and 714, a transmission light shutter 717, a reflective mirror 716, a field lens 715, a condenser lens 713, a flood lamp tube 601, a shutter 712, a revolver 607, a stage 604, a focus handle 610, and an image forming lens unit 711. Here, the light source units 602 and 609 comprise light sources 701 and 721, respectively, and collector lenses 702 and 720, respectively. Further, the flood lamp tube 601 is equipped not only with a cube unit 706 used for accommodating a plurality of cubes, but also with the ND filter 703, field stop 704, and aperture stop 705. Furthermore, the revolver 607 holds object lenses with a plurality of magnification ratios.

Incidentally, Figs. 2 and 3 show how a specimen 403 that is the subject of observation is placed on the stage 604 and how a bright field observation-use cube 707 and fluorescent observation-use cube 722 are accommodated in the cube unit 706 that is enabled to detachably attach plural kinds of cubes. Here, the fluorescent observation-use cube 722 is equipped with an excitation filter 708, a dichroic mirror 709, and an absorption filter 710.

The light emitted from the light source 721 comprised in the light source unit 609 used for the transmissive illumination passes through the collector lens 720 and then goes through the ND filter 719, field stop 718, and transmission light shutter 717 to reach at the reflective mirror 716. The light reflected by the reflective mirror 716 is passed through the field lens 715, aperture stop 714 and condenser lens 713, and is irradiated on the specimen 403. The light passing through the specimen 403 is incident to the object lens 608 mounted onto the revolver 607, is transmitted through the shutter 712, bright field observation-use cube 707, which is comprised in the cube unit 706, and image forming lens unit 711, and is incident to the image pickup unit 102.

Meanwhile, when a fluorescent observation is carried out, the light emitted from the light source 701 comprised in the light source 602 for use in an epifluorescent illumination is incident to the flood lamp tube 601 after being led through the collector lens 702, and then the incident light is led through the ND filter 703, field stop 704, and aperture stop 705, which are comprised in the flood lamp tube 601, and is led to the fluorescent observation-use cube 722 that is included in the cube unit 706. Of the light emitted from the light source 701 reaching the observation-use cube 722, a specific wave length is selectively transmitted by the excitation filter 708 included in the fluorescent observation-use cube 722, is then reflected by the dichroic mirror 709 included therein, is led through the shutter 712 and object lens 608, and is irradiated on the specimen 403 that is placed on the stage 604. In this event, the fluorescent light emitted from the specimen 403 is led through the object lens 608 and shutter 712 once again, is led through the dichroic mirror 709 and absorption filter 710 included in the observation-use cube 722, and is led through the image forming lens unit 711 to be incident to the image pickup unit 102.

The revolver 607 is connected to the control unit 108. The revolver 607 is enabled to change, using a motor (which is not shown in a drawing here) driven in accordance with an electric signal from the control unit 108, the kinds of the object lenses 608 to be inserted into the light path in response to the instruction from the control unit 108.

The description is now returned to Fig. 1. The control unit 108 is connected to both the PC 106 and microscope 101. The control unit 108 is configured to control the respective units of the microscope 101 in accordance with the instruction from the PC 101, to detect the states of the respective units on the basis of the output signals of sensors and encoders, not shown in a drawing here, which are equipped in the respective units of the microscope 101, and to transmit the detected information to the PC 106.

The imaging apparatus 100 comprises an image pickup unit 102, an image processing unit 103, an interface (I/F) unit 104, and a central processing unit (CPU) 109. Here, the CPU 109 is connected to the I/F unit 104 and is also connected to the image pickup unit 102 and image processing unit 103 by way of a control bus 110.

The light from the microscope 101 is incident to the image pickup unit 102 as an observation image. The image pickup unit 102 picks up the observation image (i.e., a specimen image) of the specimen 403 obtained from the microscope 101 to obtain a specimen image representing the specimen 403.

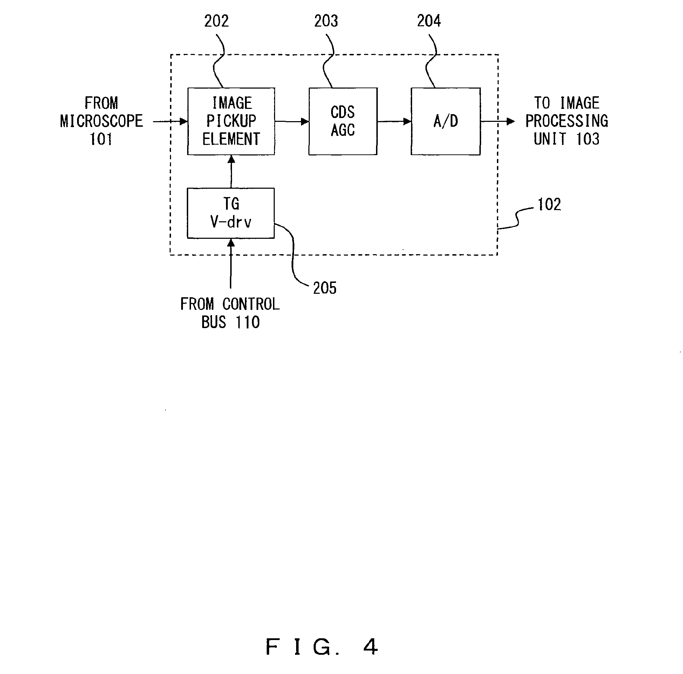

Fig. 4 shows the configuration of the image pickup unit 102.

The specimen image incident to the image pickup unit 102 is imaged on the photosensitive surface of a solid state image pickup element 202 comprising a color filter array in a Bayer method. An image pickup element drive unit 205, being connected to the solid state image pickup element 202 and control bus 110, generates a drive signal for the solid state image pickup element 202 under the condition specified by the CPU 109 and outputs the generated drive signal to the solid state image pickup element 202. The solid state image pickup element 202 opto-electrically converts the specimen image in accordance with the drive signal, reads a signal charge in accordance with a horizontal synchronous signal and a vertical signal which are input from the image pickup element drive unit 205, and outputs the readout signal as an analog signal.

A correlated double sampling (CDS) process and an automatic gain control (AGC) process are applied to the analog signal output from the solid state image pickup element 202 for a waveform shaping at a CDS/AGC circuit 203, the analog signal is then converted into image data, which is the Bayer data of a digital signal, at an A/D converter 204, and the signal is then output to the image processing unit 103 along with a synchronous signal indicating the timing of a frame frequency and of a line frequency.

The image processing unit 103 applies various types of image processing to the image data transmitted from the image pickup unit 102 in accordance with the instruction of the CPU 109 connected by way of the control bus 110.

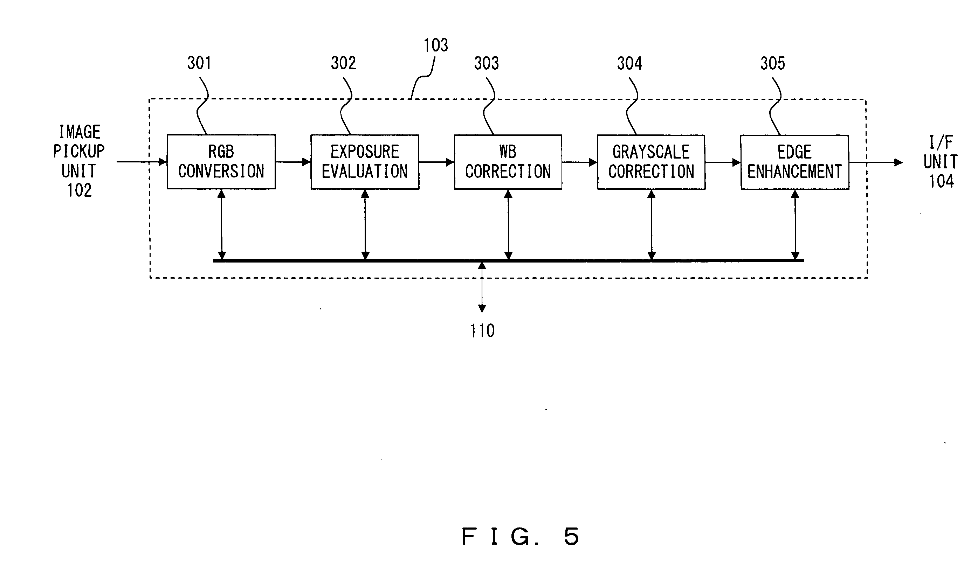

Fig. 5 shows the configuration of the image processing unit 103.

The image data input from the image pickup unit 102 is converted into respective pieces of data of the individual colors R, G and B (which are collectively called "RGB data") from a set of Bayer data by an RGB conversion unit 301 and is output to an exposure evaluation unit 302.

The exposure evaluation unit 302 calculates the average brightness value of the image data and transmits the calculation result to the CPU 109.

The CPU 109 transmits the received average brightness value data to the PC 106 by way of the I/F unit 104. The PC 106 judges whether or not the received average brightness value data is within the range of predetermined reference values and, if it is not, instructs the image pickup element drive unit 205 of the image pickup unit 102, by way of the CPU 109, to change the exposure time lengths.

The image data input into the exposure evaluation unit 302 is also input as is to a white balance correction unit 303. The white balance correction unit 303 then multiplies a coefficient, which is specified by the CPU 109, with the respective pieces of color data of the image data that are RGB data, thereby correcting the white balance, and outputs the present post-correction image data to a gray scale correction unit 304.

The gray scale correction unit 304 corrects the gray scale levels of the input image data by referring to a lookup table (LUT; not shown in a drawing) and outputs the present post-correction image data to an edge enhance unit 305.

The edge enhance unit 305, comprising a bandpass filter, extracts a high frequency component from the input image data using the filter and adds the extracted high frequency component to the input image data, thereby obtaining image data with the edge of the specimen image represented by the input image data enhanced. The edge-enhanced image data is then output to the I/F unit 104.

The I/F unit 104 is connected to the PC 106, image processing unit 103, and CPU 109. The I/F unit 104 converts the data format and manages the exchange of data with the PC 106 and with the CPU 109. Further, the I/F unit 104, comprising buffer memory inside thereof, temporarily stores the pickup image data that is input from the image processing unit 103 and transmits the image data to the PC 106 while managing a timing adjustment between itself and the PC 106.

The PC 106 is connected to the imaging apparatus 100, display unit 107, input apparatus 105, and control unit 108. The PC 106 exchanges data with the CPU 109 and with the control unit 108. Therefore, the PC 106 is capable of obtaining the respective installation states (i.e., the insertion of the optical members, e.g., the object lens 608, ND filter 703, bright field observation-use cube 707, fluorescent observation-use cube 722, field stops 704 and 718, and aperture stops 705 and 714, into the light path of the microscope 101, and extraction therefrom) of the various optical members inserted into the light path of the microscope 101 by receiving information transmitted from the control unit 108, said information being information which is detected from the output signal of the sensors and encoders (which are equipped in various units of the microscope 101 and which are not shown in a drawing herein) and which indicates the respective states of the individual units. The PC 106 is capable of controlling the respective installation states of these optical members. Note that the PC 106 is also capable of obtaining control signals used for the control unit 108 to control the respective units of the microscope 101 as the installation states information of the various optical members to be inserted into the light path of the microscope 101 hereafter.

Further, the PC 106, internally comprising a storage apparatus (not shown in a drawing herein), is capable of storing information such as a picked-up image and an imaging condition that are received at the imaging apparatus 100 by way of the I/F unit 104.

Note that the PC 106 may employ a computer with a standard configuration, that is, a computer comprising: a micro processing unit (MPU) managing the operation controls of the entirety of the microscope image pickup system shown in Fig. 1 by executing a control program; main memory used by the MPU utilized as work memory on an as required basis; an interface (I/F) unit for managing the exchanges of various data between the PC 106 and the respective constituting components of the microscope image pickup system shown in Fig. 1; and a storage apparatus, such as a hard disk apparatus, for storing the various programs and data. Here, the storage apparatus of the PC 106 pre-stores the control program for having the PC 106 carry out the various control processes executed by the PC 106 according to the present embodiment so that the MPU of the PC 106 reads the control program from the storage apparatus and executes it, enabling the PC 106 to perform the aforementioned various control processes.

The display unit 107, being a monitor such as a color liquid crystal display (LCD) or a cathode ray tube (CRT) display, displays images such as a pickup image, a graphical user interface (GUI) for the user to instruct the PC 106 to perform the various operations, and characters in accordance with an input signal from the PC 106.

The input apparatus 105 is an input device such as a button switch, keyboard switch, mouse device or the like for the user to give instructions such as the position of the stage 604, the magnification ratio of the object lens 608, various imaging conditions, the start of an imaging and the end of an imaging, or the like.

The microscope image pickup system shown in Fig. 1 is configured as described above. Note that the CPU 109 pre-stores a control program for having the CPU 109 execute the various control processes to be carried out by the CPU 109 according to the present embodiment in the read-only memory (ROM; not shown in a drawing herein) so as to enable the CPU 109 to carry out the aforementioned control processing by executing the control program.

The following is a description of an exposure control operation performed in the microscope image pickup system carried out when the object lenses 608 are changed over, by way of showing some exemplary embodiments. Note that the assumption for these embodiments is to observe the specimen 403 using a bright field observation, unless otherwise noted.

<Embodiment 1>

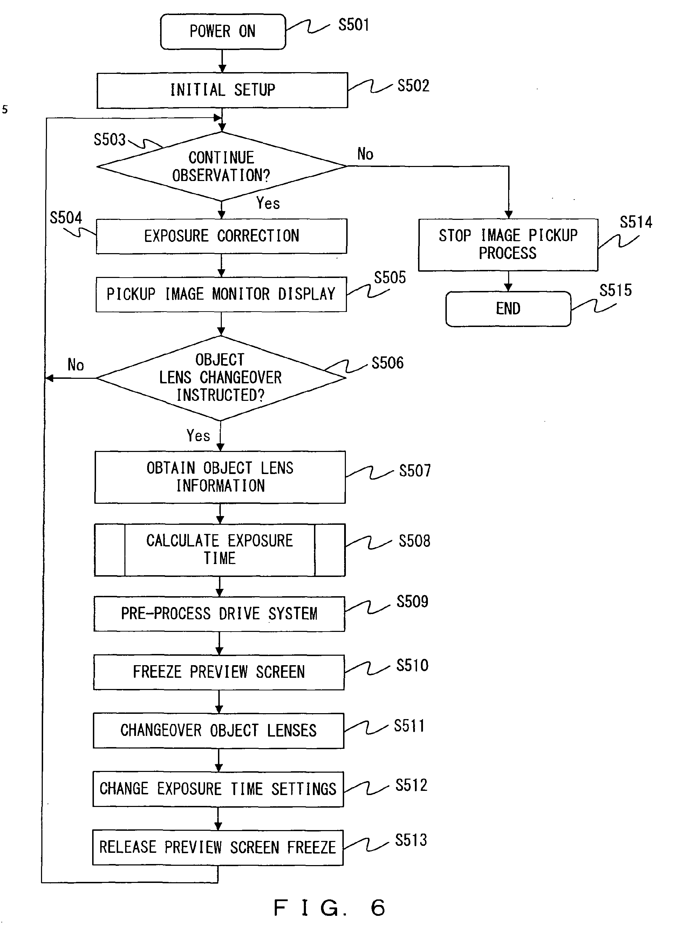

First, a description of Fig. 6 is provided. Fig. 6 is a diagram of the process content of a first example of a control process performed in the microscope image pickup system shown in Fig. 1 by way of a flow chart. An exposure control operation performed when the object lenses 608 are changed over is described with reference to the flow chart.

The process shown in Fig. 6 is started in S501 when the user (i.e., the operator) carries out the operation of turning on the power to the microscope image pickup system.

Then, an initial setup process is performed in S502.

In the initial setup process, the PC 106 performs the processing for transmitting, by way of the I/F unit 104, the default data of an image processing-use parameter to be used by the image processing unit 103. The CPU 109 performs the processing for setting the received setup parameter to the image processing unit 103. Furthermore, the PC 106 gives an instruction to the control unit 108, thereby performing an initialization process in which the respective units of the microscope 101 are set up at the initial states, such as the original point positioning carried out by driving, for example, the revolver 607, and then performing the processing for setting the initial object lens 608 in the optical axis by driving the revolver 607. Note that "M1" is the magnification ratio of the object lens 608 that is set in this event.

In this event, the user places the specimen 403 on the stage 604, turns on the power to the transmissive illumination-use light source 721, and carries out optical adjustments such as adjusting the aperture stop 714. Following these operations, the user operates the input apparatus 105 to give an instruction to the PC 106 to start an observation.

Having received the instruction, the PC 106 transmits a prescribed instruction signal to the control unit 108 and the CPU 109 by way of the I/F unit 104.

Having received the instruction signal, the CPU 109 transmits an imaging start signal to the respective units. Having received the imaging start signal, the image pickup element drive unit 205 drives the solid state image pickup element 202 so as to start an opto-electric conversion of the incident light incoming from the microscope 101.

Further, the CPU 109 measures an exposure time length with a built-in timer (not shown in a drawing herein) and causes the electric charge accumulated in the solid state image pickup element 202 to be output as an analog signal every time the CPU 109 measures a predetermined time length. The pickup image signal, which is the analog signal, after being led through the CDS/AGC circuit 203, is converted by the A/D converter 204 into image data, which is digital data, and is sent to the image processing unit 103. The image processing unit 103 applies a prescribed image processing to the image data. The present post-image processing image data is transferred to the PC 106 with a timing adjustment performed by the I/F unit 104. The PC 106 performs the processing for displaying the specimen images represented by the received image data on the screen of the display unit 107 in sequence.

Then in S503, the process for judging whether or not to continue the observing operation of the specimen 403 is carried out. In the present process, the PC 106 performs the processing for judging whether or not an instruction to end the observation has been received as a result of the input apparatus 105 having been operated. Here, if the judgment is to continue the observing operation (i.e., if the judgment result is "yes"), the PC 106 shifts the process to S504, while if the judgment is to end the observing operation, (i.e., if the judgment result is "no"), it shifts the process to S514.

Then, an exposure correction process is carried out in S504. In the present process, the CPU 109 performs the processing for exchanging data with the exposure evaluation unit 302 and with the PC 106, and for changing the setup of the exposure time of the solid state image pickup element 202 so that the average brightness value calculated by the exposure evaluation unit 302 processing the image data received from the image pickup unit 102 is within the range of the pre-set reference numerical values. The CPU 109 then drives the solid state image pickup element 202 so as to start an opto-electric conversion of the incident light from the microscope 101 and also measures an exposure time with the built-in timer (not shown in a drawing herein). Here, detecting the completion of exposure by measuring the post-change exposure time, the CPU 109 carries out the processing for causing the electric charge accumulated in the solid state image pickup element 202 to be output as an analog signal, and also for causing the image processing unit 103 to apply a prescribed image processing to image data corresponding to the image pickup signal, which is the analog signal, and the post-image processing data to be transferred from the I/F unit 104 to the PC 106.

Then in S505, the PC 106 performs the processing for importing, from the image processing unit 103 by way of the I/F unit 104, the image data obtained by picking up the post-change exposure time and causing the display unit 107 to display anew on the screen a specimen image represented by the image data.

Then in S506, the PC 106 performs the processing for judging whether or not an instruction for changing over the object lenses 608 has been received as a result of the input apparatus 105 having been operated.

Here, if the judgment is that the aforementioned changeover instruction is not received (i.e., the judgment result is "no"), the process is returned to S503 in which the above described process is carried out once again. That is, the PC 106 continuously imports the image data picked up by the image pickup unit 102 and causes the display unit 107 to display the specimen images represented by the present image data on the screen in sequence. Here, the image of the specimen 403 by virtue of the light emitted from the light source 721 is led through the individual optical members lined up in the optical axis and is imaged on the solid state image pickup element 202, and therefore the specimen images are displayed on the screen of the display unit 107 as they are constantly updated. Here, the user adjusts components, such as the ND filter 719, field stop 718, aperture stop 714, stage 604 and focus handle 610, while referring to the specimen image displayed on the display unit 107 so as to obtain the specimen image which is being focused upon in a desired observation state without vignetting or the like.

In contrast, if the judgment in S506 is that the aforementioned changeover instruction has been received (i.e., the judgment result is "yes"), the process is shifted to S507.

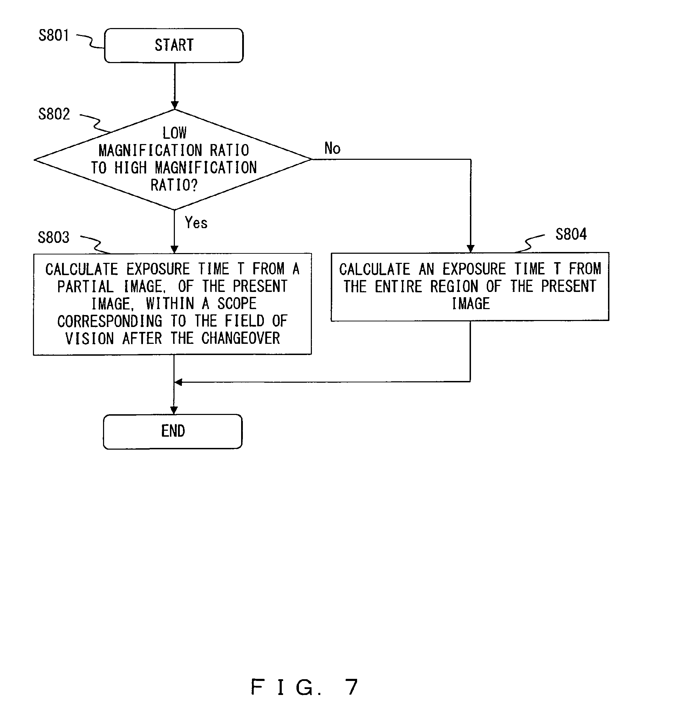

In S507, the PC 106 performs the processing for identifying an object lens 608 presently inserted into the light path of the microscope 101 on the basis of the installation state information obtained from the control unit 108, and reading the characteristics information related to the aforementioned object lens 608 and the characteristics information related to the object lens 608, with a magnification ratio of M2 as a result of the user operating the input apparatus 105, which is identified by the instruction to change over to an object lens 608 from the storage apparatus built-in in the PC 106 that stores the aforementioned characteristics information. Then in the subsequent S508, the PC 106 performs the processing for calculating an exposure time. The PC 106 executes, as the calculation process, the subroutine process shown by the flow chart in Fig. 7.

When the subroutine process is started in S801, which is shown in Fig. 7, the PC 106 performs the processing for judging, in S802, whether or not the changeover of the object lenses 608 is from a lower magnification ratio lens to a higher magnification ratio lens, that is, whether or not the magnification ratio M2 of the specimen image obtained after changing over the object lens 608 is higher than the magnification ratio M1 of the specimen image obtained prior to the aforementioned changeover.

Here, if the judgment is that the changeover of the object lenses 608 is from a lower magnification ratio to a higher magnification ratio (i.e., if the judgment result is "yes"), the PC 106 in S803 performs the processing for calculating the setup value of an exposure time, used for obtaining a specimen image picked up with the magnification ratio M2, on the basis of a partial image within the scope corresponding to the field of vision of a specimen image picked up with the magnification ratio M2 obtained after changing over the object lenses 608, where the partial image is a portion of the already obtained specimen image obtained with the magnification ratio M1.

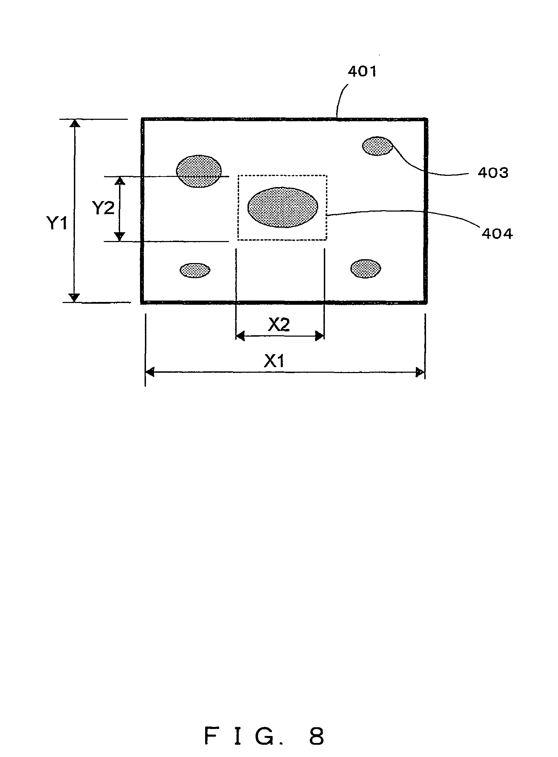

At this point, a description of Fig. 8 is provided. Fig. 8 is a diagram showing the relationship of the field of vision of a specimen image before and after changing over the object lenses 608.

Referring to Fig. 8, a specimen image vision field 401 indicated by the solid line box represents the field of vision of a specimen image before changing the object lens 608, while a partial image vision field 404 indicated by a dotted line box represents the field of vision of a specimen image after changing over the object lenses 608. Note that the object lenses 608 are changed over from a lower magnification ratio to a higher magnification ratio in the case of Fig.8.

Here, the number of pixels of the specimen image (that is, the number of pixels in the specimen image vision field 401) both in the horizontal direction (i.e., the X direction) and vertical direction (i.e., the Y direction) are shown before changing the object lens 608 as "(X1, Y1)". In this case, the number of pixels (that is, the number of pixels in the specimen image vision field 404) in the horizontal direction and vertical direction (X2, Y2) of a partial image corresponding to the field of vision of a specimen image after changing over the object lenses 608 within the specimen image can be calculated by the following expression (1):

$$(X2, Y2) = (X1*M2/M1, Y1*M2/M1) \qquad ...(1)$$

Here, the assumption is that the centers of the vision fields of the specimen image before and after changing over the object lenses 608 are at the same position.

Meanwhile, defining the position of the pixel at the bottom left corner of the specimen image before changing the object lens 608 as the original point (0, 0) of a pixel address (x, y), the pixel address of the position of four corners of a partial image within the range corresponding to the vision field of a specimen image after changing over the object lenses 608 can be respectively calculated by expressions (2) through (5):

$$(X1*1/2-X1*M2/M1*1/2,$$
$$Y1*1/2-Y1*M2/M1*1/2) \qquad ...(2)$$

$$(X1*1/2+X1*M2/M1*1/2,$$
$$Y1*1/2-Y1*M2/M1*1/2) \qquad ...(3)$$

$$(X1*1/2-X1*M2/M1*1/2,$$
$$Y1*1/2+Y1*M2/M1*1/2) \qquad ...(4)$$

$$(X1*1/2+X1*M2/M1*1/2,$$

$$Y1*1/2+Y1*M2/M1*1/2) \qquad …(5)$$

In the process of S803, the PC 106 first performs the processing for obtaining the average brightness value (i.e., the average brightness value of the specimen image vision field 401) I1, which is calculated by the exposure evaluation unit 302, from the CPU 109 by way of the I/F unit 401. Then the PC 106 calculates the values of the above described expressions (1) through (5). Then the PC performs the processing for calculating, on the basis of these values, the average brightness value (i.e., the average brightness value of a partial image vision field 404) I2 of the partial image within the scope of the vision field of a specimen image obtained after changing over the object lenses 608. Note that an alternative configuration may be such that the PC 106 performs the processing in which the calculation results of the values of the above expressions (1) through (5) are transmitted to the CPU 109 by way of the I/F unit 104 and the CPU 109 gives these values to the exposure evaluation unit 302, and thereby the exposure evaluation unit 302 is caused to calculate the average brightness value I2 of the aforementioned partial image, instead of the PC 106 calculating the aforementioned value I2, and the obtained value I2 is obtained by the CPU 109 by way of the I/F unit 104.

Next, the PC 106 performs the processing for calculating, using expression (6) following, the setup value T of the exposure time of the solid state image pickup element 202 used for an image pickup operation after changing over the object lenses 608, on the basis of the obtained average brightness values I1 and I2:

$$T= T1*(I1/I2)*(M2/M1)^2*(NA1/NA2)^2 \qquad …(6)$$

Here, "T1" is the setup value of the present exposure time (i.e., the setup value of the exposure time when the specimen image picked up with the magnification ratio M1 has been obtained), while "NA 1" and "NA 2" are the respective numerical aperture values of the object lenses 608 before and after the changeover.

That is, expression (6) is provided for setting an exposure time T used for the image pickup unit 102 picking up a specimen image in order to obtain the specimen image picked up with the magnification ratio M2. This specimen image is obtained on the basis of the information related to the magnification ratio and numerical aperture of the object lens 608 that was inserted into the observation light path of the microscope 101 when the image pickup unit 102 obtained the specimen image with the magnification ratio M1 by picking up the specimen image obtained by the microscope 101 before changing the object lens 608, and also on the basis of the information related to the magnification ratio and numerical aperture of the object lens 608 that is to be inserted into the present observation light path when the image pickup unit 102 obtains a specimen image picked up with the magnification ratio M2 by picking up the present specimen image. Expression (6) is also the expression for changing the exposure time T1, which has been set to the image pickup unit 102 when the specimen image with the magnification ratio M1 has been obtained, to an exposure time T.

Further, the value T of the expression (6) is obtained by changing the exposure time T1 which was set to the image pickup unit 102 when the specimen image was picked up with the magnification ratio M1, on the basis of the average value I1 of the brightness value of the specimen image picked up with the magnification ratio M1 and the average value of the brightness value of a partial image of the present specimen image, within the scope corresponding to the field of vision of a specimen image picked up with the magnification ratio M2 to be obtained after changing over the object lenses 608.

Note that the respective values of the above described X1, Y1, M1, NA1, M2 and NA2, all of which are required for calculating the values of the above expressions (1) through (6), are pre-stored in the storage apparatus of the PC 106 as characteristics information. In the process of S507 shown in Fig. 6, the PC 106 calculates the values of these expressions related to the object lenses 608 before and after changing them over, utilizing the characteristics information that is read from the storage apparatus.

Upon completion of the process in the above described S803, the process of the subroutine is completed in S805, and the process is returned to Fig. 6.

In contrast, if the judgment in S802 is that the changeover of the object lenses 608 is not from a lower magnification ratio to a higher magnification ratio (i.e., the judgment result is "no"), then the PC 106 performs the processing for calculating the setup value of an exposure time to be used when a specimen image will be picked up with the magnification ratio M2, on the basis of the entirety of the already obtained specimen image picked up with the magnification ratio M1 in S804. Specifically, the PC 106 calculates the value of the setup value T by setting I1= I2 (that is, I1/I2= 1) for the above expression (6). Then, upon completion of the process in S804, the subroutine process is completed in S805 and the process returns to the process shown in Fig. 6.

The description now returns to the process shown in Fig. 6.

In S509, which is subsequent to the process of S508, the PC 106 performs the process (i.e., preprocessing the drive system) for starting the power supply to the motor that is the drive system driving the revolver 607 by giving an instruction to the control unit 108.

Then in S510, the PC 106 performs the processing for retaining (i.e., freezing) the display of a specimen image (i.e., a preview display) that is currently displayed on the display unit 107 by temporarily stopping an update of the aforementioned display. Then in the subsequent S511, the PC106 performs the processing for giving an instruction to the control unit 108 to rotate the revolver 607, thereby changing over the object lens 608 currently inserted into the light path to an object lens 608 specified by the instruction given by the user operating the input apparatus 105.

Then in S512, the PC 106 performs the processing for transmitting the exposure time T calculated in the process of S508 (i.e., the subroutine process shown in Fig. 7) to the CPU 109 by way of the I/F unit 104. The CPU 109 performs the processing for changing the setup of the exposure time of the solid state image pickup element 202 to the received exposure time T.

Then in S513, the PC 106 performs the processing for releasing the freezing in updating the display of the specimen image in accordance with the process of S509 and restarting the process for sequentially displaying, on the screen of the display unit 107, the specimen image represented by the image data received from the image processing unit 103 by way of the I/F unit 104. The process then returns to S503 to restart the above described processes anew. That is, the PC 106 continuously imports the image data picked up by the image pickup unit 102 in accordance with the setup of the post-change exposure time T and causes the specimen images represented by the aforementioned image data to be sequentially displayed on the screen of the display unit 107.

In contrast, if the judgment of S503 is that the observing operation is to be ended (i.e., if the judgment result is "no"), the PC 106 performs the processing for stopping a series of image pickup operations performed by the microscope image pickup system in S514 and the control process shown in Fig. 6 is completed in the subsequent S515.

As described above, the present embodiment makes it possible to make the setup of an exposure time to be used after changing over the object lenses 608 appropriate, shortening the time for converging on the exposure control when the object lenses 608 are changed over, thereby improving the operability of a task directed at observing the specimen 403.

Note that the present embodiment is configured to calculate the setup value of an exposure time to be used when obtaining a specimen image picked up with the magnification ratio M2 on the basis of the entirety of the already obtained specimen image picked up with the magnification ratio M1 when the object lens 608 with a higher magnification ratio is changed to an object lens 608 with a lower magnification ratio. An alternative configuration may be such that the PC 106 performs the processing for storing the image data of the latest specimen image for each magnification ratio in the built-in storage apparatus within the PC 106 in the process of S505 shown in Fig. 6, and, when the object lens 608 is changed from a higher magnification ratio to a lower magnification ratio, reads the image data of a specimen image with a lower magnification ratio (i.e., a wider field of vision) than the magnification ratio selected at the present changeover in the process of S804 shown in Fig. 7 and calculates the setup value of an exposure time to be used when obtaining a specimen image after changing over the object lenses 608 on the basis of a partial image, of the aforementioned read-out specimen image, within the scope corresponding to the field of vision of a specimen image picked up after changing over the object lenses 608. Such a configuration makes it possible to set a more appropriate exposure time when the object lens 608 with a higher magnification ratio is changed over to an object lens 608 with a lower magnification ratio in, for example, a bright field observation with a small variation in the brightness of a specimen.

<Embodiment 2>

The present preferred embodiment is configured to use a microscope 101 enabled to move the specimen 403 to an arbitrary position by driving the stage 604 with a stage drive unit such as a motor and, when the distance of the aforementioned movement exceeds a predetermined distance, to calculate an appropriate exposure time to be applied to picking up a specimen image after moving the specimen 403 on the basis of the brightness value of image data picked up with a different magnification ratio, obtained in advance of the operation.

The microscope image pickup system shown in Fig. 1 is configured in such a manner that the control unit 108 controls the stage 604 so as to move the specimen 403 to a position in an XY plane that is perpendicular to the observation light path of the microscope 101, that is, to the aforementioned position in accordance with an instruction issued from the PC 106.

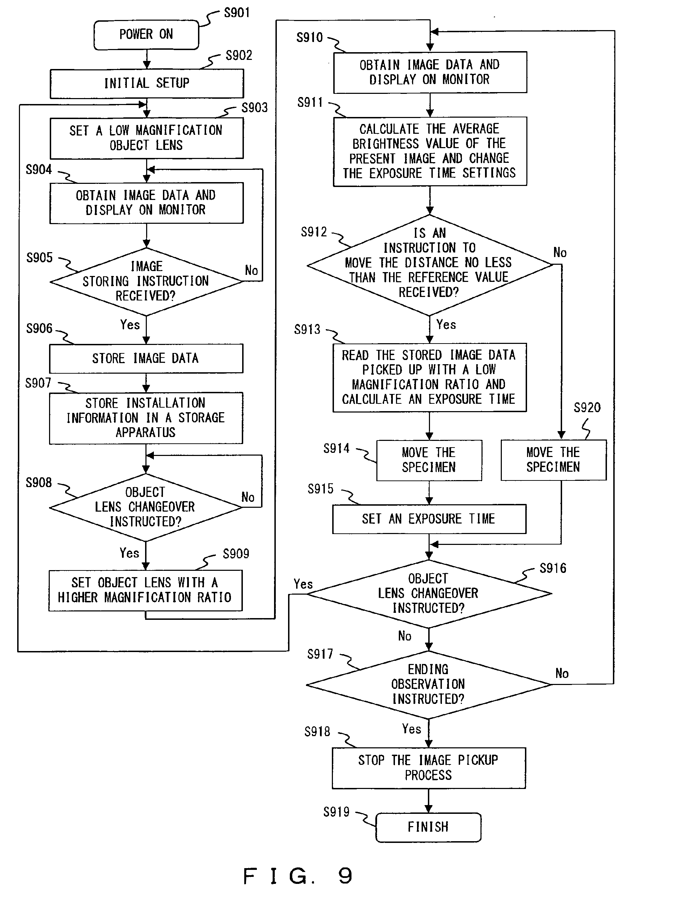

A description of Fig. 9 is provided at this time. Fig. 9 is a diagram of the process content of a second example of a control process carried out in the microscope image pickup system shown in Fig. 1 by way of a flow chart. Let it provide a description of an exposure control operation, which is performed when object lenses 608 are changed over, with reference to the flow chart.

The process of Fig. 9 is started when a user (i.e., an operator) carries out an operation of turning the power on to the microscope image pickup system in S901, and an initial setup process is carried out in the subsequent S902. The process of S902 is similar to that of S502 according to the first example shown in Fig. 6 and therefore the description is not provided here.

Then, in S903, the PC 106 performs the processing for driving a revolver 607 so as to set the object lens 608 with a low magnification ratio in the optical axis. The magnification ratio of the object lens 608 to be set in this event is defined as "M1".

Here, the user places the specimen 403 on the stage 604, and also turns on the power supply to a transmissive illumination-use light source 721 and carries out optical adjustments such as adjusting an aperture stop 714. Then the user operates an input apparatus 105 so as to give an instruction to the PC 106 for starting an observation. This prompts the PC 106 to perform the processing for operating an imaging apparatus 100 so as to obtain specimen image data by picking up a specimen image and causing a display unit 107 to display the specimen images represented by the obtained specimen image data in sequence, in S904. Note that the process of S903 is similar to what has already been described as the process subsequent to S502 according to embodiment 1 and therefore a duplicate description is not provided here.

Further, the PC 106 gives the CPU 109 an instruction to change the setup of an exposure time in this event. Having received the instruction, the CPU 109 performs the processing for exchanging data with an exposure evaluation unit 302 and PC 106 and for changing the setup of the exposure time of a solid state image pickup element 202 so that the average brightness value of the image data received from the image pickup unit 102, which is calculated by the exposure evaluation unit 302, falls within the range of pre-set reference numerical values.

Here, in order to obtain an accurately focused specimen image without a vignetting or the like in a desired observation state, the user operates the ND filter 719, field stop 718, aperture stop 714, stage 604 and the like to adjust these components while referring to the specimen image displayed on the display unit 107. Furthermore, the user adjusts the focus in a suitable state by operating a focus handle 610 while adjusting the position of the specimen 403 by moving the stage 604 in the XY plane so as to include in the observation field of vision (i.e., the display region of the specimen image) of the display unit 107 the entirety of a region of the specimen 403 which is desired to be observed.

Next, in S905, the PC 106 performs the processing for judging whether or not an instruction to store the specimen image has been received from the input apparatus 105 that has been operated. Here, if the judgment is that the aforementioned instruction for storing it has been received (i.e., if the judgment result is "yes"), the process proceeds to S906. In contrast, if the judgment is that such an instruction is not received (i.e., if the judgment result is "no"), the process returns to S904 to repeat the above described process.

In S906, the PC 106 performs the processing for storing the image data representing the specimen image currently displayed on the display unit 107 in the storage apparatus built-in within the PC 106. Then, in the subsequent S907, the PC 106 also performs the processing for obtaining, from the control unit 108, the information of an installation state in which the specimen image has been obtained and storing the obtained information in the aforementioned storage apparatus. Note that the value of the coordinate indicating the position of the stage 604 on the XY plane is included in the installation state information according to the present embodiment.

Next, in S908, the PC 106 performs the processing for judging whether or not an instruction to change over the object lenses 608 has been received as a result of the input apparatus 105 having been operated. Here, if the judgment is that the aforementioned instruction for changeover has been received (i.e., if the judgment result is "yes"), the process proceeds to S909. In contrast, if the judgment is that such an instruction is not received (i.e., if the judgment result is "no"), the judgment process of S908 is repeated until the aforementioned instruction is received (i.e., until the judgment result becomes "yes").

In S909, the PC 106 performs the processing for driving the revolver 607 to cause an object lens 608 with a higher magnification ratio to be set in the optical axis. The assumption here is that the magnification ratio of the object lens 608 that is set in this event is defined as "M2", with M2>M1.

Next, in S910, the PC 106 performs the processing for operating the imaging apparatus 100 so as to pick up a specimen image, obtaining the specimen image data, and causing the display unit 107 to display on its screen the specimen image represented by the obtained specimen image data. Note that the process of S910 is similar to the process subsequent to that of S502 according to embodiment 1 and therefore the description is not provided here.

Next, in S911, the PC 106 gives the CPU 109 an instruction to change the setup of an exposure time. Having received the instruction, the CPU 109 performs the processing for exchanging data with the exposure evaluation unit 302 and PC 109 and for changing the setup of the exposure time of the solid state image pickup element 202 so that the average brightness value of the image data received from the image pickup unit 102, which is the average brightness value calculated by the exposure evaluation unit 302, falls within the range of pre-set reference numerical values.

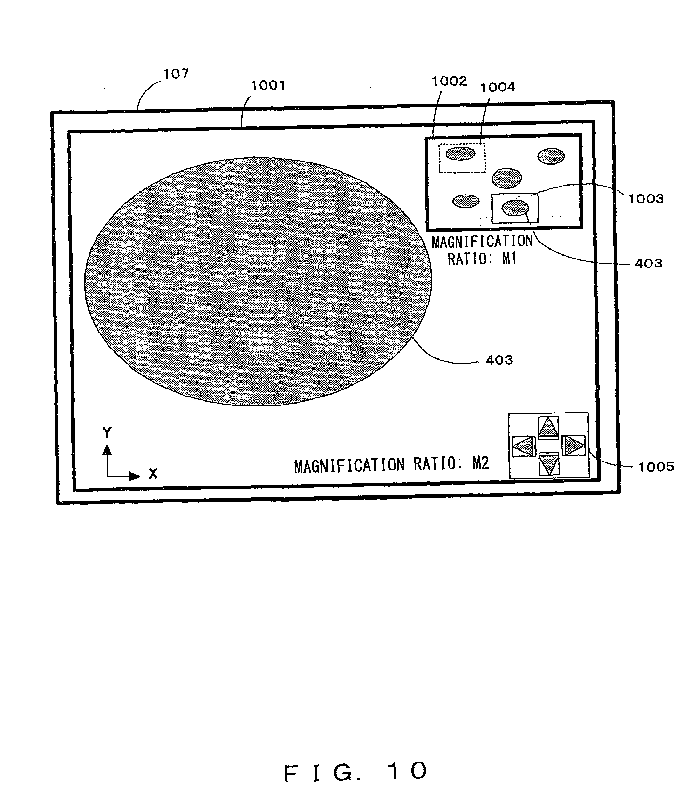

A description for Fig. 10 is provided at this time. Fig. 10 shows the first display example of a specimen image on the display unit 107. The example of Fig. 10 shows how the entire region of the specimen 403 desired to be observed is displayed inclusively in the observing field of vision of a specimen image 1001 picked up with the magnification ratio M2.

Note that the PC 106 performs the processing for displaying a specimen image with the magnification ratio M1 stored in the storage apparatus as a reference image 1002 on the display screen of the display unit 107, in addition to displaying the specimen image 1001 picked up with the magnification ratio M2 currently obtained by the image pickup unit 102. Note that the specimen observation region 1003 of the reference image 1002 shows a region corresponding to the field of vision of the specimen image 1001 with the magnification ratio M2.

While the screen shown in Fig. 10 is displayed, the user operates the input apparatus 105 to carry out the operation of clicking a move button 1005 or of specifying an arbitrary position on the reference image 1002 that is a specimen image picked up with the magnification ratio M1. The assumption here is that this operation gives an instruction to move the specimen observation region 1003 shown in Fig. 10 to an observation region 1004.

In this event, the PC 106 performs the processing for detecting the distance the specimen 403 moves (movement distance) in a direction perpendicular to the observation light path of the microscope 101. More specifically, the PC 106 performs the processing for calculating distance between the center of the specimen observation region 1003 before a move in accordance with the aforementioned instruction and the center of the observation region 1004 after the move (i.e., the movement distance of the specimen 403) in accordance with the aforementioned instruction, on the basis of the image data of a specimen image picked up with the magnification ratio M1 and the installation state information (i.e., the magnification information of the object lens 608 and the position information of the stage 604 on the XY plane) obtained when the specimen image picked up with the magnification ratio M1 has been obtained, that is, the information stored in the storage apparatus. Then, in S912, the PC 106 performs the processing for judging whether or not the movement distance is longer than a pre-set reference distance. Here, if the judgment result is that the movement distance is longer than the reference distance (i.e., if the judgment result is "yes"), the process proceeds to S913, while if the movement distance is not longer than the reference distance (i.e., if the judgment result is "no"), the process proceeds to S920.

In S913, the PC 106 performs the processing for calculating, in the move destination, the average brightness value I2 of a specimen image 1001 with the magnification ratio M2 and also for calculating the average brightness value I1, within a scope corresponding to the observation region 1004, of the specimen image picked up with the magnification ratio M1, in accordance with the present instruction on the basis of the image data of the specimen image with the magnification ratio M1. Then, the PC 106 performs the processing for calculating, using the above described expression (6), the setup value T of the exposure time of the solid state image pickup element 202 to be used for an image pickup operation after the move in accordance with the present instruction on the basis of the obtained average brightness values I1 and I2.

Then, in S914, the PC 106 performs the processing for moving the stage 604 with the intervention of the control unit 108, with the updating of the display of the specimen image 1001 that is currently displayed on the display unit temporarily stopped and retained as is, and moving the specimen 403 to a position in accordance with the present instruction (i.e., to a position at which the observation region 1004 corresponds to the field of vision of the specimen image) by driving the stage 604 with the intervention of the control unit 108. Then, in S915, the PC 106 performs the processing for releasing the temporary stoppage of the updating of the display of the specimen image 1001, restarting the process of sequentially displaying the specimen images represented by the image data received from the image processing unit 103 by way of the I/F unit 104 and also transmitting the exposure time T calculated in the process of S913 to the CPU 109 by way of the I/F unit 104. That is, the PC 106 performs the processing for continuously importing the image data picked up by the image pickup unit 102 in accordance with the setup of the post-change exposure time T, and for sequentially displaying the specimen images represented by the present image data on the screen of the display unit 107, and then for moving the process to S916.

In contrast, if the judgment in S912 is that the move distance is not longer than the reference distance (i.e., if the judgment result is "no"), then the PC 106 performs the processing for moving the stage 604 with the intervention of the control unit 108 without changing the setup of the exposure time T and merely moving the specimen 403 to a position in accordance with the present instruction in S920, and then shifting the process to S916.

In S916, the PC 106 performs the processing for judging whether or not an instruction to change over the object lenses 608 has been received by an operation of the input apparatus 105. Here, if the judgment is that the aforementioned changeover instruction is not received (i.e., if the judgment result is "no"), then the process proceeds to S917, while if the aforementioned changeover instruction has been received (i.e., if the judgment result is "yes"), then the process returns to S903 to repeat the above described processes.

In S917, the PC 106 performs the processing for judging whether or not an instruction to end the observation has been received as a result of an operation on the input apparatus 105. Here, if the judgment is that an instruction to end the observation has been received (i.e., if the judgment result is "yes"), the process proceeds to S918. In contrast, if the judgment is that an instruction to end the observation is not received (i.e., if the judgment result is "no"), the process returns to S910 for repeating the above described processes. The repetition of the processes starting from S910 sets an exposure condition anew after the setup of an exposure time if the movement distance of the specimen 403 is no shorter than a predetermined value.

In S918, the PC 106 performs the processing for stopping a series of image pickup operations performed by the microscope image pickup system, and completes the control processing shown in Fig. 9 in the subsequent S919.

As described above, if the movement distance of an observing region is greater than a predetermined value, the amount of change in the brightness value of an observation image is expected to be not negligibly large, and therefore the present embodiment is configured to calculate an exposure time to be used when the observing region at the move destination is imaged by the image pickup unit 102 on the basis of the brightness value of a specimen image, obtained in advance of the operation, picked up with a low magnification ratio. The setting of the exposure condition of the image pickup unit 102 in accordance with the movement distance of the specimen 403 in a direction perpendicular to the observation light path of the microscope 101 as described above shortens the time for converging on the exposure control carried out when the object lenses 608 are changed over, enabling an improvement in the operability of the work for observing the specimen 403.

Note that the present embodiment is configured to change the exposure time on the basis of the movement distance of an observing region. An alternative configuration may be, for example, to calculate the moving speed of the stage 604 on the basis of the output signal of an encoder detecting the movement of the stage 604 and perform a setup to change an exposure time when the moving speed exceeds a predetermined value.

Another alternative configuration may be, for example, to record the history of the average value of the brightness values of the specimen images sequentially picked up by the image pickup unit 102 with the same magnification ratio, and to change the exposure time lengths when a change in the value no lower than a predetermined value is detected, that is, when a change in brightness that is no lower than a predetermined value occurs to the specimen image obtained by the image pickup unit 102.

Yet another alternative configuration may be, for example, to record the history of exposure time lengths used when specimen images picked up by the image pickup unit 102 with the same magnification ratio have sequentially been obtained, and to change the exposure time lengths when a change in the value no lower than a predetermined value is detected.

<Embodiment 3>

The present preferred embodiment is configured to appropriately change exposure time after changing over object lenses 608 in accordance with the installation state of not only the object lens 608 but also that of optical members such as a filter inserted into the observation light path of the microscope 101.

In the microscope image pickup system shown in Fig. 1, the field stop 718, aperture stop 714, and ND filter 719, which is an optical filter, are connected to the control unit 108. The control unit 108 is enabled to change the respective installation states of these optical members in the observation light path in accordance with an instruction from the PC 106 issued on the basis of the user operating the input apparatus 105. Note that the storage apparatus of the PC 106 stores parameters representing the characteristics of these optical members.

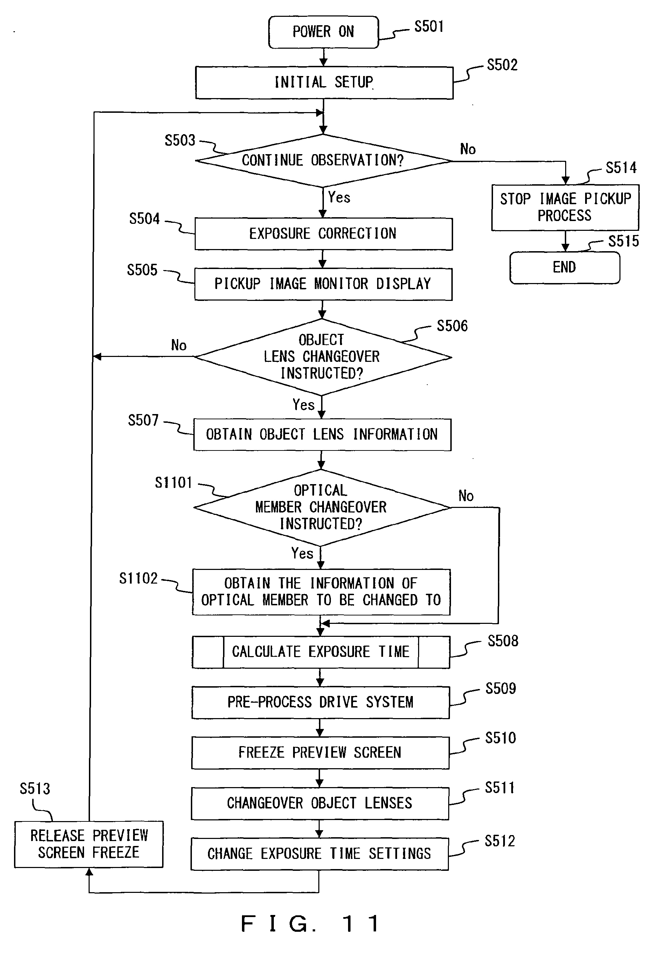

A description of Fig. 11 is provided at this time. Fig. 11 is a diagram of the process content of a third example of a control process carried out in the microscope image pickup system shown in Fig. 1 by way of a flow chart. Next is a description of an exposure control operation performed when the object lenses 608 are changed over, with reference to the flow chart.

Note that, among the processes in the individual steps shown in the flow chart of Fig. 11, the same sign is assigned to the same content as in the first example shown in Fig. 6, and a duplicate description is not provided here.

Referring to Fig. 11, in S1101, which is subsequent to S507, the PC 106 performs the processing for judging whether or not an instruction to change the installation states of either of the optical members (i.e., the ND filter 719, field stop 718, or aperture stop 714 in this case) has been received as a result of the input apparatus 105 having been operated. Here, if the judgment is that the aforementioned instruction has been received (i.e., if the judgment result is "yes"), the process proceeds to S1102. In contrast, if the judgment is that the aforementioned instruction is not received (i.e., if the judgment result is "no"), the process proceeds to S508, as shown in Fig. 11.

In S1102, the PC 106 performs the processing for reading, from the storage apparatus, the parameter data of an optical member to be inserted into the observation light path of the microscope 101 in accordance with the present change instruction, and then shifts the process to S508, as shown in Fig. 11.

In S508, shown in Fig. 11, the PC 106 performs the subroutine process shown in Fig. 7, which is similar to the first example shown in Fig. 6. Except in S803 and S804 of the present subroutine process, the configuration is such that an exposure time T, which is used when the image pickup unit 102 obtains a specimen image after the object lenses 608 are changed over, is obtained by calculating the value of the following expression (7) in place of the above described expression (6):

$$T = T1*(I1/I2)*(M2/M1)^2 *$$

$$(NA1/NA2)^2 *AS*FS*ND \qquad \ldots (7)$$

Here, "AS", "FS" and "ND" represent the brightness ratios of the aperture stops 714, the field stops 718, and the ND filter 719, respectively, before and after the changeover of the object lenses 803. Therefore, if these optical members are changed to brighter when the object lenses 608 are changed over, the value of the exposure time is reduced.

As described above, the present embodiment is configured to calculate an exposure time used when the image pickup unit 102 picks up an image after the object lenses 608 are changed over, on the basis of the amount of change in brightness due to changing the installation states of the optical members, i.e., the object lens 608, ND filter 719, field stop 718 and aperture stop 714, which are equipped in the microscope 101. Therefore, the time for converging on the exposure control is shortened when the object lenses 608 are changed over, and thereby the operability of the work for observing the specimen 403 is improved.

Note that the present embodiment lists the object lens 608, ND filter 719, field stop 718, and aperture stop 714 as examples of the optical members; the present embodiment may also be applied to other optical members such as a light source with a variable volume of light.

<Embodiment 4>

The present preferred embodiment is configured to appropriately change the exposure time lengths after object lenses 608 are changed over in the microscope image pickup system, shown in Fig. 1, which allows the designation of a region as a target of control for an exposure condition.

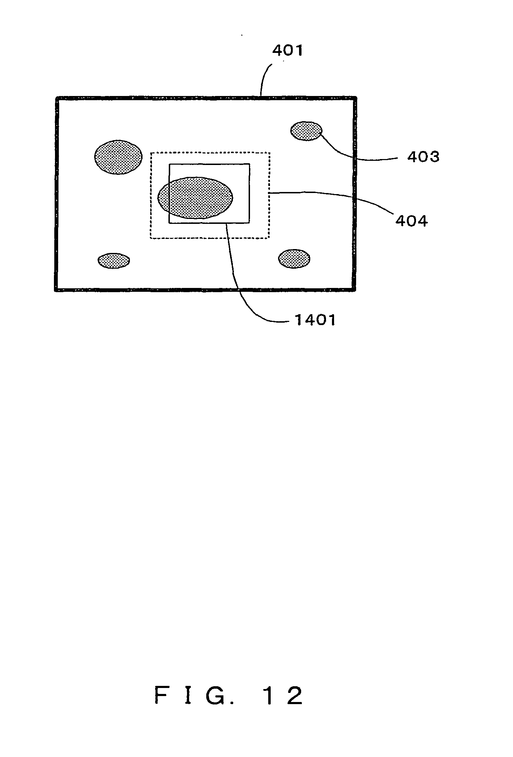

First, a description of Fig. 12 is provided. Fig. 12 shows the second display example of a specimen image on the display unit 107.

Referring to Fig. 12, an exposure spot region 1401 is designated at the center part of a specimen image vision field 401, which is the field of vision of the specimen image picked up with a low magnification ratio; the specimen image includes the specimen 403. The exposure spot region 1401 is the target of controlling an exposure condition. Note that Fig. 12 shows the state in which the exposure spot region 1401 is included in the observation vision field (i.e., the partial image vision field 404) of a specimen image picked up with a high magnification ratio; this vision field which is, as before, also designated by the center part.

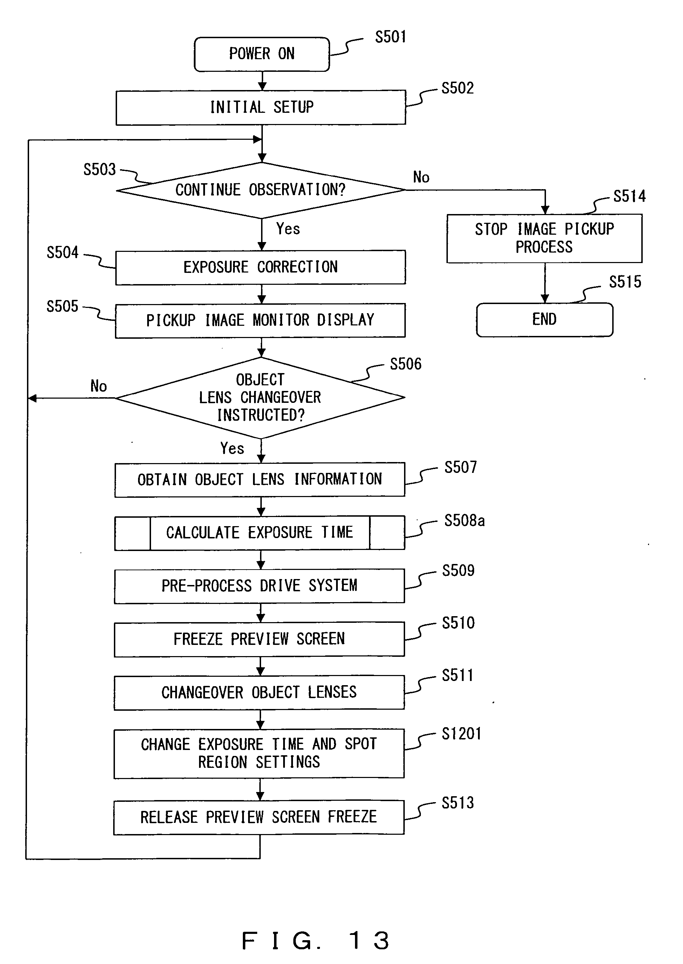

Next is a description of Fig. 13, which shows the process content of a fourth example of a control process carried out in the microscope image pickup system shown in Fig. 1 by way of a flow chart. Then, there is a description of the exposure control operation performed when the object lenses 608 are changed over, with reference to the flow chart.

Note that among the processes in the individual steps shown in the flow chart of Fig. 13, the same signs are assigned to the same elements as in the first example shown in Fig. 6, and a duplicate description is not provided here.

In contrast to the first example shown in Fig. 6, the processes of S508 and S512 are replaced with the processes of S508a and S1201, respectively, in the flow chart shown in Fig. 13.

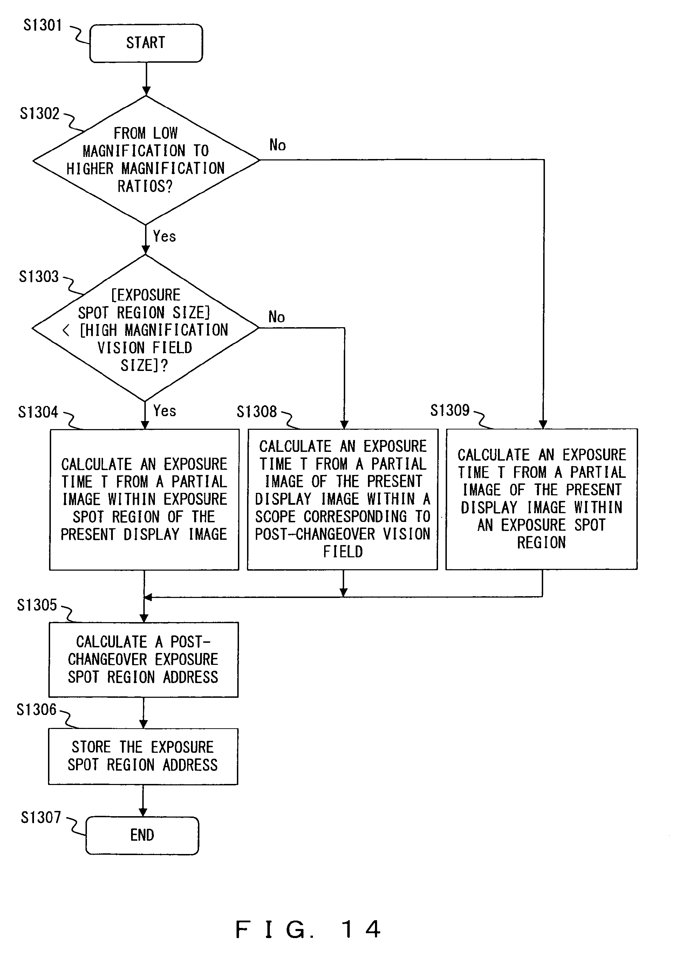

Referring to Fig. 13, in S508a, which is subsequent to S507, the PC 106 performs the processing for calculating an exposure time. According to the present embodiment, however, the PC 106 executes a subroutine process shown in Fig. 14 as the calculation process.

When the subroutine process is started in S1301 shown in Fig. 14, first, the PC 106 performs the processing for judging whether or not the changeover of object lenses 608 is from a lower magnification ratio to a higher magnification ratio, in S1302.

Here, if the judgment is that the changeover of object lenses 608 is from a lower magnification ratio to a higher magnification ratio (i.e., if the judgment result is "yes"), the process proceeds to S1303, while, if the changeover of object lenses 608 is not from a lower magnification ratio to a higher magnification ratio (i.e., if the judgment result is "no"), the process proceeds to S1309.

In S1303, the PC 106 performs the processing for judging whether or not the exposure spot region 1401 is included in the observation vision field (i.e., the partial image vision field 404) of the specimen image picked up with a high magnification ratio. Here, if the judgment is that the exposure spot region 1401 is included in the partial image vision field 404 (i.e., if the judgment result is "yes"), the process proceeds to S1304, while, if the judgment is that the exposure spot region 1401 is not included in the partial image vision field 404 (i.e., if the judgment result is "no"), the process proceeds to S1308.

In S1304, PC 106 performs the processing for calculating the setup value of an exposure time that will be used when a specimen image picked up with a higher magnification ratio is obtained after the object lenses 608 are changed over, on the basis of the partial image within the exposure spot region 1401 that has been used as the basis for calculating the exposure time by the image pickup unit 102 when the specimen image picked up with a lower magnification ratio before changing the object lens 608 was obtained. Specifically, PC 106 performs the processing for calculating the value of a setup value T by substituting I1= I2 (that is, I1/I2= 1) for the above described expression (6). Upon completion of the process in S1304, the process proceeds to S1305.

Meanwhile, in S1308, the PC 106 performs the processing for calculating the setup value of an exposure time that will be used when a specimen image picked up with a higher magnification ratio is obtained, on the basis of the partial image within the scope of the exposure spot region 1401 of the already obtained specimen image picked up with a lower magnification ratio before the object lens 608 is changed over, and on the basis of the partial image of the specimen image picked up with the aforementioned lower magnification ratio within the scope corresponding to the observation vision field (i.e., the partial image vision field 404) of a specimen image picked up with a higher magnification ratio to be obtained after the object lenses 608 are changed over.

Specifically, first, the PC 106 performs the processing for obtaining the average brightness value (i.e., the average brightness value of the exposure spot region 1401) I1, which is calculated by the exposure evaluation unit 302 and is related to the partial image that has been used as the basis for calculating the exposure time by the image pickup unit 102 used when the specimen image picked up with a lower magnification ratio had been obtained before the object lens 608 was changed over, from the CPU 109 by way of the I/F unit 104. Then, the PC 106 performs the processing for calculating the average brightness value of the partial image (i.e., the average brightness value of the partial image vision field 404) I2 within the scope corresponding to the observation vision field (i.e., the partial image vision field 404) of a specimen image picked up with a higher magnification ratio after the object lenses 608 are changed over, in a similar process to that of S803 in the subroutine process shown in Fig. 7. Then, the PC 106 performs the processing for calculating, in accordance with the above described expression (6), the setup value T of the exposure time of the solid state image pickup element 202, which will be used for an image pickup operation after the object lenses 608 are changed over, on the basis of the obtained average brightness values I1 and I2. Then, upon completion of the process in S1308, the process proceeds to S1305.

Incidentally, if the judgment process in S1302 determines that the changeover of object lenses 608 is not from a lower magnification ratio to a higher magnification ratio, an exposure spot region defined in the specimen image picked up with the higher magnification ratio before the aforementioned changeover is included, without fail, in the specimen image picked up with a lower magnification ratio obtained after the aforementioned changeover. In this case, therefore, the PC 106 performs the processing for calculating, on the basis of the partial image within the exposure spot region that has been used by the image pickup unit 102 for calculating the exposure time used when the specimen image picked up with a higher magnification ratio before the object lens 608 was changed, the setup value of an exposure time to be used when a specimen image is picked up with a lower magnification ratio after the object lenses 608 are changed over, in S1309. Specifically, the PC 106 performs the processing for calculating the value of a setup value T by substituting I1 = I2 (that is, I1/I2= 1) for the above described expression (6). Then, upon completion of the process in S1309, the process proceeds to S1305.

Then, in S1305, the PC 106 performs the processing for reading the information, stored in the storage apparatus, of the magnification ratios of the object lenses 608 before and after the changeover and the pixel address information, also stored in the storage apparatus, for respectively indicating the position of an exposure spot region and the position of an observation vision field after the object lenses 608 are changed over, and for calculating pixel address information indicating the position of the exposure spot region after the present changeover on the basis of these pieces of information; in the subsequent S1306, it performs the processing for storing the calculated pixel address information by having the storage apparatus store it. Then, upon completion of the above described process, the subroutine process is completed in S1307 and the process returns to that shown in Fig. 13.

Incidentally, in S1201, which is subsequent to S511 shown in Fig. 13, the PC 106 performs the processing for transmitting the exposure time T calculated in the process of S508a (i.e., the subroutine process shown in Fig. 14) to the CPU 109 by way of the I/F unit 104, and also for reading the pixel address information that has been stored in the process of S1306 (shown in Fig. 14) from the storage apparatus to display a frame indicating the position of the exposure spot region in the specimen image presently displayed on the display unit 107. Meanwhile, having received the exposure time T in this event, the CPU 109 performs the processing for changing the setup of the exposure time of the solid state image pickup element 202 to the received exposure time T.

As described above, the present embodiment is configured to change the exposure time that was set when a specimen image picked up with the a lower magnification ratio was obtained both on the basis of the information related to the brightness value of a partial image within an exposure spot region designated in the specimen image picked up with the lower magnification ratio before changing the object lens 608 and on the basis of the information related to the brightness value of the partial image, the partial image being the target of setting the exposure condition of the specimen image picked up with the low magnification ratio within the scope corresponding to the field of vision of a specimen image picked up with a higher magnification ratio after the object lenses 608 are changed over. As such, the present embodiment is configured to calculate the exposure time that will be used after the object lenses 608 are changed over, using the exposure spot region that is focused upon by the user as the target, and therefore the time to converge on an appropriate exposure state for an observation condition desired by the user can be shortened.

Note that an exposure spot region is set at the center part of the field of vision of a specimen image according to the present embodiment. An exemplary alternative configuration may be such that, if an exposure spot region overlaps with the observation vision field after changing the object lenses 608 when the object lens 608 is changed over to one with a higher magnification ratio in a configuration that is enabled to move an observation vision field relative to the specimen 403, the overlapping region is designated as the exposure spot region after the changeover, and such that, if the aforementioned overlapping does not occur, the entirety of the observation vision field after the aforementioned changeover is designated as the exposure spot region. Such a configuration makes it possible to obtain a similar effect to that of the present embodiment.

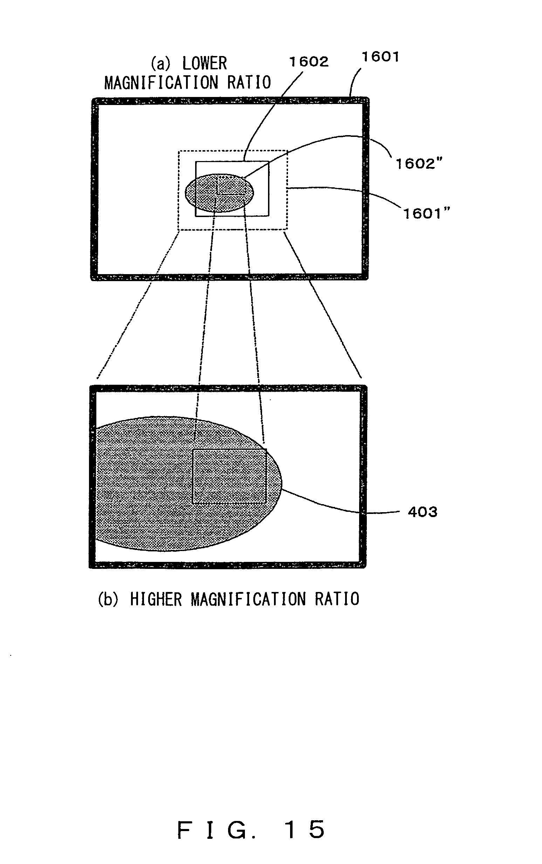

Meanwhile, if the size of an exposure spot region relative to the observation vision field is designated as constant, that is, as shown in Fig. 15, if there is a relationship between the observation vision field 1601 and the exposure spot region 1602 in a specimen image picked up with a lower magnification ratio to the observation vision field 1601" and exposure spot region 1602", their positional relationship can be obtained from the ratio of magnification ratios of the object lenses 608. Therefore, an alternative configuration may be such that, when the object lens 608 is changed from a lower magnification ratio to a higher magnification ratio, an exposure time is calculated on the basis of the partial image of a region 1602" corresponding to the exposure spot region, after changing over the object lenses 608, of a specimen image picked up with the lower magnification ratio and the calculated exposure time is set to the image pickup unit 102 in order to obtain a specimen image to be picked up with the present post-changeover higher magnification ratio. Such a configuration also makes it possible to obtain a similar effect to that of the present embodiment.

<Embodiment 5>

The present preferred embodiment is configured to define the average brightness value of a specimen image calculated for obtaining an exposure time to be used after changing over object lenses 608 or the average brightness value of a partial image of the aforementioned specimen image as the average brightness value of pixels having a brightness value no lower than a predetermined threshold value from among the pixels constituting the specimen image.

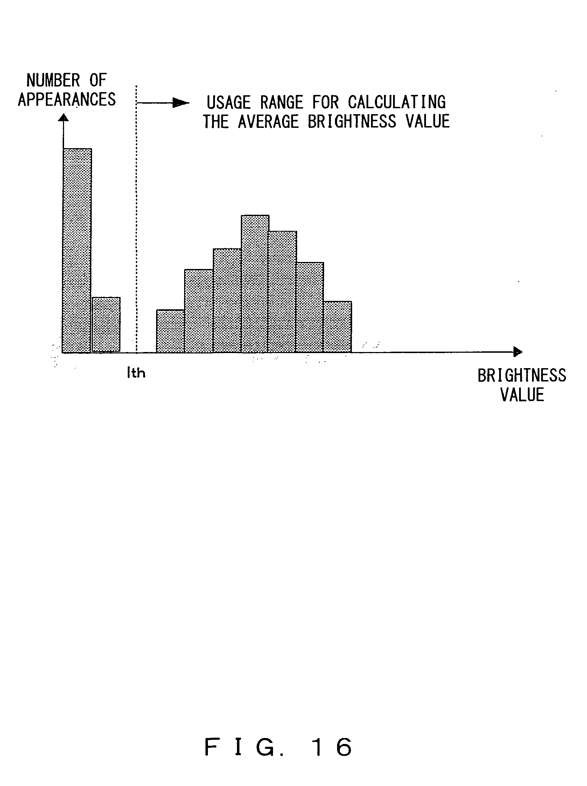

Next, Fig. 16 is described, which is a diagram showing an exemplary histogram showing the number of pixels for each brightness value thereof, the pixels constituting a specimen image. Referring to Fig. 16, the horizontal axis shows the values of brightness while the vertical axis shows the frequency of pixels of which the brightness value is the same.

According to the present embodiment, a brightness value (i.e., the brightness value lth in the example shown in Fig. 16) that is the lowest among all the brightness values and of which the frequency formed in the histogram is the minimum, is set as the above described predetermined threshold value that is set for extracting the brightness values of pixels as the target for calculating the average brightness value.

When the present embodiment is implemented in the microscope image pickup system shown in Fig. 1, the control process shown in Fig. 6 is carried out in an essentially similar manner to the case of embodiment 1. Here, a description is provided for the difference from embodiment 1 in the case of observing a specimen 403 by means of a fluorescent observation and using the present embodiment.

Referring to Fig. 6, the process for calculating an exposure time is carried out in the process of S504 and S508. According to the present embodiment, the PC 106 first performs the processing for counting the frequency of pixels for each brightness value, the pixels constituting the specimen image obtained by the image pickup unit 102, and for obtaining histogram data as exemplified in Fig. 16 in this event. Then the PC 106 performs the processing for identifying the above described predetermined threshold value lth that is the lowest among the brightness values of which the frequency formed in the histogram is the minimum. Then, the PC 106 performs the processing for detecting the pixel addresses (ADR1) of all pixels for which the brightness values are less than the threshold value lth and has the storage apparatus memorize/store the pixel addresses (ADR1). Then, when the average brightness value of an image is calculated, the PC 106 performs the processing for calculating the average of the brightness values of the remaining pixels after excluding pixels identified by the stored pixel addresses from among the pixels constituting the aforementioned image and calculating an exposure time on the basis of the calculated average value of brightness.

As described above, the present embodiment is configured to exclude a pixel(s) that is less than a predetermined threshold value from the target of calculating the average brightness value of a specimen image to be used when an exposure time is calculated, and therefore to set an exposure time to be used after changing over the object lenses 608 by targeting only the pixels expressing the image of a specimen 403, with the background part of the specimen image excluded, when a fluorescent observation is carried out. Therefore, the setup of the exposure time is carried out more appropriately, reducing the time to converge on the exposure control when the object lenses 608 are changed over, and thereby the operability in the work for observing the specimen 403 is improved.

Note that the present embodiment may be alternatively configured such that the PC 106 performs the processing for issuing a prescribed warning if all pixels constituting a specimen image, or a predetermined percentage of pixels or more, are excluded from the target of calculating the average brightness value because the brightness values of those excluded are less than the above described predetermined threshold value. Such a configuration enables the user to recognize a possibility of the specimen image not including the pixel of the specimen 403, and makes it possible to prevent a saturation of exposure time due to the specimen image not including the image of the specimen 403.

Note that the warning may be, for example, a display of character information, or a display of a figure in a predetermined color or brightness, on the display unit 107. The warning method may also be a predetermined sound generated by a sound output unit connected to the PC 106. Further, the method may be a predetermined vibration generated by a vibrator connected to the PC 106. Further, the warning may be made by either one of the above described methods or a combination of two or more of them.

Further, the present embodiment may alternatively be configured such that the PC 106 obtains the histogram data related to a portion of a series of specimen images (e.g., related to the specimen images obtained at predetermined time intervals in accordance with the time measured with a timer built-in in the PC 106) instead of the PC 106 performing the processing for obtaining the histogram data related to all specimen images. Such a process decreases the frequency of performing the present obtainment process, reducing the load levied by the PC 106 performing the processing for obtaining the histogram data, thereby preventing degradation in the feeling of operability.

As such, the preferred embodiments of the present invention have been described. The present invention, however, may be improved and/or modified in various possible ways within the spirit and scope of the present invention, in lieu of being limited to the above described individual preferred embodiments.

For example, the microscope 101 used for the microscope image pickup system shown in Fig. 1 may be applied to either an epifluorescent illumination type or transmissive illumination type.

Further, the microscope image pickup system shown in Fig. 1 exemplifies the case of using, as the solid state image pickup element 202, a color photography solid state image pickup element 202 that comprises a color filter arrangement according to the Bayer method; the present invention may also be embodied in the case of using a solid state image pickup element comprising another color filter arrangement such as a stripe or in the case of using a black & white photography solid state image pickup element comprising no color filter.

Further, the above described individual preferred embodiments are configured to control an exposure time among the image pickup operations when the image pickup unit 102 carries out photographing; an alternative configuration may be one that controls the volume of light incident to the solid state image pickup element 202 from the microscope 101.

**Claims**

1. A microscope-use image pickup apparatus (100), comprising:

   an image pickup unit (102) for picking up an observation image of a specimen (403) produced by a microscope (101) to obtain a specimen image;
   an installation state information obtainment unit (106) for obtaining installation state information indicating the installation state of an optical member (608, 703, 704, 705, 707, 714, 718, 722) inserted into the observation light path of the microscope (101); and
   an exposure condition setup unit (106) for setting an exposure condition to be used when the image pickup unit (102) picks up the observation image in order to obtain a specimen image in a second magnification ratio on the basis of installation state information used when the image pickup unit (102) obtained a specimen image in a first magnification ratio by picking up the observation image, and on the basis of installation state information to be used when the image pickup unit (102) obtains a specimen image in the second magnification ratio, which is a different magnification ratio from the first magnification ratio, by picking up the specimen image.

2. The microscope-use image pickup apparatus (100) according to claim 1, further comprising
   a control unit (108) for controlling the optical member (608, 703, 704, 705, 707, 714, 718, 722) inserted into the observation light path of the microscope (100), wherein
   the installation state information obtainment unit (106) obtains the control content of the installation state carried out by the control unit (108) as the installation state information.

3. The microscope-use image pickup apparatus (100) according to claim 1, wherein
   the optical member is an object lens (608), and
   the installation state information is the information of the magnification ratio and numerical aperture of an object lens (608) inserted into the observation light path of the microscope (101) when the image pickup unit (102) obtained the specimen image in the first magnification ratio and the information of the magnification ratio and numerical aperture of an object lens (608) to be inserted into the observation light path of the microscope (101) when the image pickup unit (102) obtains a specimen image in the second magnification ratio, and
the exposure condition setup unit (106) changes, on the basis of the installation state information, an exposure condition which was set to the image pickup unit (102) when it obtained the specimen image in the first magnification ratio.

4. The microscope-use image pickup apparatus (100) according to claim 1, wherein
the exposure condition setup unit (106) further sets the exposure condition on the basis of specimen image information obtained from a specimen image obtained by the image pickup unit (102).

5. The microscope-use image pickup apparatus (100) according to claim 4, wherein
the specimen image information is information related to the brightness value of the specimen image.

6. The microscope-use image pickup apparatus (100) according to claim 5, wherein
the second magnification ratio is higher than the first magnification ratio, and
the exposure condition setup unit (106) changes an exposure condition that was set to the image pickup unit (102) when it obtained a specimen image in the first magnification ratio, on the basis of information related to the brightness value of the specimen image in the first magnification ratio and on the basis of information related to the brightness value of a partial image, of the specimen image in the first magnification ratio, within a scope corresponding to the field of vision of a specimen image in the second magnification ratio.

7. The microscope-use image pickup apparatus (100) according to claim 1, further comprising
a movement distance detection unit (106) for detecting the movement distance of the specimen (403) in a direction perpendicular to the observation light path of the microscope (101), wherein
the exposure condition setup unit (106) sets the exposure condition further in accordance with the movement distance.

8. The microscope-use image pickup apparatus (100) according to claim 7, wherein
the exposure condition setup unit (106) sets the exposure condition when the movement distance is no less than a predetermined value.

9. The microscope-use image pickup apparatus (100) according to claim 1, wherein
the exposure condition setup unit (106) sets the exposure condition when a change in brightness which is no less than a predetermined value occurs to a specimen image obtained by the image pickup unit (102).

10. The microscope-use image pickup apparatus (100) according to claim 1, wherein
the optical member is any one of an object lens (608), an optical filter (703, 707, 722), a field stop (704, 718), and an aperture stop (705, 714), or a combination of two or more of the aforementioned.

11. The microscope-use image pickup apparatus (100) according to claim 5, wherein
the second magnification ratio is higher than the first magnification ratio and
the microscope-use image pickup apparatus (100) further comprises a region designation instruction obtainment unit (105) for obtaining an instruction to designate a region as the target of the exposure condition setup unit (106) setting the exposure condition, wherein
the exposure condition setup unit (106) changes an exposure condition that was set to the image pickup unit (102) when it obtained a specimen image in the first magnification ratio, on the basis of information related to the brightness value of the specimen image in the first magnification ratio and on the basis of information related to the brightness value of a partial image, of the specimen image in the first magnification ratio, within a scope corresponding to the field of vision of a specimen image in the second magnification ratio.

12. The microscope-use image pickup apparatus (100) according to claim 6, wherein
the specimen image information is information indicating the average of the brightness values of pixels for which the brightness values are no less than a predetermined threshold value, from among the pixels constituting the specimen image.

13. The microscope-use image pickup apparatus (100) according to claim 12, wherein
the brightness value of a pixel for which the brightness value is the lowest value from among the brightness values whose frequency of appearance is the lowest in a histogram showing the frequency of appearance for each brightness value of a pixel constituting the specimen image is defined as the predetermined threshold value.

**14.** The microscope-use image pickup apparatus (100) according to claim 12, further comprising
a warning unit (107, 106) for issuing a prescribed warning if the number of pixels for which the brightness values are less than the predetermined threshold value, from among the pixels constituting the specimen image in the first magnification ratio, is no less than a predefined number.

**15.** The microscope-use image pickup apparatus (100) according to claim 14, wherein
the prescribed warning is any one of a display of character information, a display of a figure by way of a prescribed color or brightness, a generation of a prescribed sound, and a generation of a prescribed vibration, or a combination of two or more of these.

EP 2 081 072 A1

F I G.  1

TO IMAGE PICKUP UNIT 102

101

605

602

601

607

FROM CONTROL
UNIT 108

608

403

609

604

610

F I G. 2

TO IMAGE PICKUP UNIT 102

FROM
CONTROL
UNIT 108

F I G.  3

21

FROM
MICROSCOPE
101

202          203          204

IMAGE
PICKUP
ELEMENT

CDS
AGC

A/D

TO IMAGE
PROCESSING
UNIT 103

102

TG
V-drv

205

FROM CONTROL
BUS 110

F I G.  4

F I G. 5

23

```
        ┌─────────────────┐
        │   POWER ON      │～  S501
        └─────────────────┘
                 │
        ┌─────────────────┐
        │  INITIAL SETUP  │～  S502
        └─────────────────┘
                 │
            ╱────────────╲
      S503 ╱  CONTINUE    ╲        No
          ╲  OBSERVATION? ╱───────────────┐
            ╲────────────╱                │
                 │ Yes                    │
        ┌─────────────────┐    ┌─────────────────────┐
  S504  │ EXPOSURE        │    │ STOP IMAGE PICKUP   │～ S514
        │ CORRECTION      │    │      PROCESS        │
        └─────────────────┘    └─────────────────────┘
                 │                      │
   ┌─────────────────────────┐  ┌───────────────┐
   │ PICKUP IMAGE MONITOR    │～S505│     END    │～ S515
   │       DISPLAY           │  └───────────────┘
   └─────────────────────────┘
                 │
            ╱────────────╲
     No    ╱   OBJECT     ╲
  ◄───────╲ LENS CHANGEOVER╱～ S506
           ╲ INSTRUCTED?  ╱
            ╲────────────╱
                 │ Yes
        ┌─────────────────┐
        │ OBTAIN OBJECT   │～ S507
        │ LENS INFORMATION│
        └─────────────────┘
                 │
        ┌─────────────────┐
        │ CALCULATE       │～ S508
        │ EXPOSURE TIME   │
        └─────────────────┘
                 │
        ┌─────────────────┐
        │ PRE-PROCESS     │～ S509
        │ DRIVE SYSTEM    │
        └─────────────────┘
                 │
        ┌─────────────────┐
        │ FREEZE PREVIEW  │～ S510
        │     SCREEN      │
        └─────────────────┘
                 │
        ┌─────────────────┐
        │ CHANGEOVER      │～ S511
        │ OBJECT LENSES   │
        └─────────────────┘
                 │
        ┌─────────────────┐
        │ CHANGE EXPOSURE │～ S512
        │ TIME SETTINGS   │
        └─────────────────┘
                 │
        ┌─────────────────┐
        │ RELEASE PREVIEW │～ S513
        │ SCREEN FREEZE   │
        └─────────────────┘
```

F I G.  6

S801 ── START

S802 ──
LOW
MAGNIFICATION RATIO
TO HIGH MAGNIFICATION
RATIO?

No

Yes

S803 ──
CALCULATE EXPOSURE TIME T FROM A
PARTIAL IMAGE, OF THE PRESENT
IMAGE, WITHIN A SCOPE
CORRESPONDING TO THE FIELD OF
VISION AFTER THE CHANGEOVER

S804
CALCULATE AN EXPOSURE TIME T FROM
THE ENTIRE REGION OF THE PRESENT
IMAGE

END

F I G.  7

401

403

404

Y1

Y2

X2

X1

F I G. 8

F I G. 9

F I G. 1 0

POWER ON — S501

INITIAL SETUP — S502

S503 — CONTINUE OBSERVATION? — No — S514 STOP IMAGE PICKUP PROCESS — S515 END

Yes

S504 — EXPOSURE CORRECTION

S505 — PICKUP IMAGE MONITOR DISPLAY

OBJECT LENS CHANGEOVER INSTRUCTED? — S506 — No

Yes

S507 — OBTAIN OBJECT LENS INFORMATION

S1101 — OPTICAL MEMBER CHANGEOVER INSTRUCTED? — No

Yes

S1102 — OBTAIN THE INFORMATION OF OPTICAL MEMBER TO BE CHANGED TO

CALCULATE EXPOSURE TIME — S508

PRE-PROCESS DRIVE SYSTEM — S509

FREEZE PREVIEW SCREEN — S510

CHANGEOVER OBJECT LENSES — S511

S513 — RELEASE PREVIEW SCREEN FREEZE

CHANGE EXPOSURE TIME SETTINGS — S512

F I G. 1 1

FIG. 12

```
                    ┌─────────────────┐  ╭─ S501
                    │    POWER ON     │──╯
                    └────────┬────────┘
                             ▼
          ┌──────────────────────────────────┐  ╭─ S502
          │          INITIAL SETUP           │──╯
          └────────────────┬─────────────────┘
                           │
     ┌─────────────────────▼──────────────────────┐
     │                                            │
S503 ╲│                                     No     ▼
  ╭───◇────────────────────────────────────────────────────┐
  ╲ │        CONTINUE OBSERVATION?         │                 │
   ◇────────────────────────────────────────┘    ┌──────────▼──────────┐  ╭─ S514
     │                                            │  STOP IMAGE PICKUP  │──╯
     │ Yes                                        │      PROCESS        │
S504 ╭─╮ ┌──────────────────────────────┐        └──────────┬──────────┘
  ╰──╯ │      EXPOSURE CORRECTION        │                   │
       └───────────────┬────────────────┘                   ▼
                       │                          ┌──────────────────┐  ╭─ S515
S505 ╭─╮ ┌─────────────▼────────────────┐         │       END        │──╯
  ╰──╯ │  PICKUP IMAGE MONITOR DISPLAY   │         └──────────────────┘
       └───────────────┬────────────────┘
                       │
       No      ╱─────────────────╲  ╭─ S506
  ◄────────────       OBJECT
            ╲    LENS CHANGEOVER    ╱
             ╲    INSTRUCTED?      ╱
              ╲─────────┬─────────╱
                    Yes │
       ┌────────────────▼─────────────────┐  ╭─ S507
       │  OBTAIN OBJECT LENS INFORMATION   │──╯
       └────────────────┬─────────────────┘
       ┌──┬─────────────▼────────────┬───┐  ╭─ S508a
       │  │   CALCULATE EXPOSURE TIME │   │──╯
       └──┴─────────────┬────────────┴───┘
       ┌────────────────▼─────────────────┐  ╭─ S509
       │    PRE-PROCESS DRIVE SYSTEM       │──╯
       └────────────────┬─────────────────┘
       ┌────────────────▼─────────────────┐  ╭─ S510
       │      FREEZE PREVIEW SCREEN        │──╯
       └────────────────┬─────────────────┘
       ┌────────────────▼─────────────────┐  ╭─ S511
       │     CHANGEOVER OBJECT LENSES      │──╯
       └────────────────┬─────────────────┘
       ┌────────────────▼─────────────────┐  ╭─ S1201
       │  CHANGE EXPOSURE TIME AND SPOT    │──╯
       │       REGION SETTINGS            │
       └────────────────┬─────────────────┘
       ┌────────────────▼─────────────────┐  ╭─ S513
       │   RELEASE PREVIEW SCREEN FREEZE   │──╯
       └────────────────┬─────────────────┘
                        │
```

F I G.  1 3

S1301 — START

S1302 — FROM LOW MAGNIFICATION TO HIGHER MAGNIFICATION RATIOS? — No

Yes

S1303 — [EXPOSURE SPOT REGION SIZE] < [HIGH MAGNIFICATION VISION FIELD SIZE]? — No

S1304 — Yes

CALCULATE AN EXPOSURE TIME T FROM A PARTIAL IMAGE WITHIN EXPOSURE SPOT REGION OF THE PRESENT DISPLAY IMAGE

S1308 — CALCULATE AN EXPOSURE TIME T FROM A PARTIAL IMAGE OF THE PRESENT DISPLAY IMAGE WITHIN A SCOPE CORRESPONDING TO POST-CHANGEOVER VISION FIELD

S1309 — CALCULATE AN EXPOSURE TIME T FROM A PARTIAL IMAGE OF THE PRESENT DISPLAY IMAGE WITHIN AN EXPOSURE SPOT REGION

S1305 — CALCULATE A POST-CHANGEOVER EXPOSURE SPOT REGION ADDRESS

S1306 — STORE THE EXPOSURE SPOT REGION ADDRESS

S1307 — END

F I G.   1 4

(a) LOWER
MAGNIFICATION RATIO

1602

1601

1602"

1601"

403

(b) HIGHER MAGNIFICATION RATIO

F I G.  1 5

NUMBER OF
APPEARANCES

USAGE RANGE FOR CALCULATING
THE AVERAGE BRIGHTNESS VALUE

Ith

BRIGHTNESS
VALUE

F I G. 1 6

Europäisches
Patentamt

European
Patent Office

Office européen
des brevets

**EUROPEAN SEARCH REPORT**

Application Number

EP 09 00 0586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 661 692 A (KAWASAKI MASAMI [JP]) 28 April 1987 (1987-04-28) * column 5, line 19 - column 6, line 3; figures 1,2 * | 1-15 | INV. G02B21/36 |
| Y | JP 2001 313869 A (CASIO COMPUTER CO LTD) 9 November 2001 (2001-11-09) * abstract * | 1-15 | |
| A | US 2006/268151 A1 (YAMASHITA YUICHIRO [JP]) 30 November 2006 (2006-11-30) * claim 1 * | 1 | |
| A | US 2003/043292 A1 (PYLE NORMAN C [US] ET AL) 6 March 2003 (2003-03-06) * claim 1 * | 1 | |

TECHNICAL FIELDS
SEARCHED      (IPC)

G02B

The present search report has been drawn up for all claims

| Place of search | Date of completion of the search | Examiner |
|---|---|---|
| The Hague | 17 June 2009 | Lehtiniemi, Henry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 00 0586

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2009

| Patent document cited in search report | | Publication date | Patent family member(s) | | Publication date |
|---|---|---|---|---|---|
| US 4661692 | A | 28-04-1987 | DE<br>EP | 3475013 D1<br>0124241 A1 | 08-12-1988<br>07-11-1984 |
| JP 2001313869 | A | 09-11-2001 | NONE | | |
| US 2006268151 | A1 | 30-11-2006 | JP | 2006333229 A | 07-12-2006 |
| US 2003043292 | A1 | 06-03-2003 | JP | 2003110915 A | 11-04-2003 |

EPO FORM P0459

For more details about this annex : see Official Journal of the European Patent Office, No. 12/82

**EP 2 081 072 A1**

**Patent documents cited in the description**

- JP 2001292369 A

- JP 2006317406 A